(19) Europäisches Patentamt
European Patent Office
Office européen des brevets

(11) **EP 3 637 202 B1**

(12) **EUROPEAN PATENT SPECIFICATION**

(45) Date of publication and mention
of the grant of the patent:
**01.09.2021 Bulletin 2021/35**

(51) Int Cl.:
***G05B 13/02*** *(2006.01)*          ***G06F 7/544*** *(2006.01)*

(21) Application number: **19200738.3**

(22) Date of filing: **01.10.2019**

(54) **OPTIMIZATION DEVICE AND CONTROL METHOD OF OPTIMIZATION DEVICE**

OPTIMIERUNGSVORRICHTUNG UND STEUERUNGSVERFAHREN EINER
OPTIMIERUNGSVORRICHTUNG

DISPOSITIF D'OPTIMISATION ET PROCÉDÉ DE COMMANDE D'UN DISPOSITIF D'OPTIMISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.10.2018 JP 2018192634**

(43) Date of publication of application:
**15.04.2020 Bulletin 2020/16**

(73) Proprietor: **FUJITSU LIMITED
Kanagawa 211-8588 (JP)**

(72) Inventors:
• **MIYAZAWA, Toshiyuki
Kawasaki-shi, Kanagawa 211-8588 (JP)**
• **TAKATSU, Motomu
Kawasaki-shi, Kanagawa 211-8588 (JP)**
• **MATSUBARA, Satoshi
Kawasaki-shi, Kanagawa 211-8588 (JP)**

(74) Representative: **Haseltine Lake Kempner LLP
Cheapside House
138 Cheapside
London EC2V 6BJ (GB)**

(56) References cited:
**US-A1- 2018 075 342     US-A1- 2018 107 172**

• **WITTE E E ET AL: "PARALLEL SIMULATED
ANNEALING USING SPECULATIVE
COMPUTATION", IEEE TRANSACTIONS ON
PARALLEL AND DISTRIBUTED SYSTEMS, IEEE
SERVICE CENTER, LOS ALAMITOS, CA, US, vol.
2, no. 4, 1 October 1991 (1991-10-01) , pages
483-494, XP000235820, ISSN: 1045-9219, DOI:
10.1109/71.97904**

**Description**

FIELD

The embodiments discussed herein are related to an optimization device and a control method of the optimization device.

BACKGROUND

In the present society, information processing is carried out in all fields. The information processing is performed using an arithmetic device such as a computer, and various data are calculated and processed to obtain a meaningful result, thereby performing prediction, decision, and control. As one of these fields of information processing, optimization problem is an important field. For example, a problem of minimizing a resource and a cost required for performing a certain process, or a problem of finding a solution for maximizing an effect of the process, and the like. Clearly, these issues are very important.

A linear programming problem is representative of optimization problems. The linear programming problem is to find a value of a variable that maximizes or minimizes an evaluation function represented by the linear sum of plural continuous variables under the constraint condition represented by the linear sum, and is used in various fields such as a product production planning. Excellent solutions such as a simplex method and an interior point method are known as solutions for the linear programming problem and may efficiently solve the problems having hundreds of thousands of variables.

In the meantime, many optimization problems are known in which variables take discrete values rather than continuous values. For example, there may be a traveling salesman problem in which a shortest route is sought when going back to the initial place after traveling through multiple cities in turn, a knapsack problem of seeking a combination that maximizes the sum of the values when packing different items into a knapsack, or the like. Such problems are called discrete optimization problems, combinatorial optimization problems, etc., and it is known to be difficult to obtain an optimal solution for the problems.

The biggest cause of difficulty in solving discrete optimization problems is that, since each variable may only take discrete values, a method of changing the variables continuously in the direction in which the evaluation function is improved to reach the optimal solution may not be used. In addition, there are many values which locally give the extreme value of the evaluation function (*i.e.,* minimum (large) solutions, local solutions) in addition to the values of the variables which give the real optimum value (*i.e.,* optimum solution, global solution). For this reason, an exhaustive method may be utilized to obtain an optimal solution reliably, which causes an extended calculation time. The discrete optimization problems have many problems called an NP (Non-deterministic Polynomial) difficulty problem in the computational complexity theory, in which the calculation time for finding the optimal solution is expected to increase exponentially with the size of the problem (*i.e.,* the number of variables). The traveling salesman problem and the knapsack problem described above are also NP difficulty problems.

As described above, it is difficult to reliably obtain the optimal solution of the discrete optimization problem. Therefore, for the discrete optimization problem that is important for practical use, solutions using properties inherent to the problem have been devised. As described above, since many discrete optimization problems are expected to take exponentially increasing computation time to obtain an exact solution, most practical solutions are not optimal solutions but approximate solutions which may obtain a solution where the value of the evaluation function is close to the optimum value.

With respect to an approximate solution specific to these problems, approximate solutions that may handle a wide range of problems in order to solve the problems without using the nature of the problems are also known. These are called metaheuristic solutions, and may include a simulated annealing method (SA method), a genetic algorithm, a neural network, and the like. Although these methods may be less efficient than solutions that take advantage of the nature of the problems, it may be expected that these methods give solutions faster than solutions that obtain exact solutions.

The simulated annealing method will be described below. The simulated annealing method is a kind of the Monte Carlo method, and is a method of stochastically obtaining a solution using a random number value. In the following, a problem of minimizing the value of an evaluation function to be optimized will be described as an example, and the value of the evaluation function will be called energy. In the case of maximization, the sign of the evaluation function may be changed.

Starting from the initial state in which one of discrete values is substituted for each variable, a state close to the initial state (*e.g.,* a state in which only one variable is changed) is selected from the current state (combination of variable values) and a state transition thereof is considered. The energy change for the state transition is calculated, and the state transition is adopted according to the value to stochastically determine whether to change the state or to keep the original state without adopting the state. In a case where the acceptance probability when energy falls is selected to be larger than the acceptance probability when energy rises, a state change occurs in the direction of energy decrease on average, and it may be expected that a state transition to a more appropriate state will occur with the passage of time. Finally, it may be possible to obtain an optimal solution or an approximate solution that gives energy close to the optimal value. In a case where this is adopted when energy falls deterministically or where this is not adopted when energy rises, the energy change will be a broad monotonous decrease over time, but no more changes will occur once the energy change reaches a local solution. As described above, because the discrete optimization problem has a large number of local solutions, a state is mostly caught by local solutions that are not close to the optimal value. Therefore, a determination whether to adopt the state may be made stochastically.

In the simulated annealing method, it has been proved that the state reaches the optimum solution at the limit of time (number of iterations) infinity when the acceptance probability of the state transition is determined as follows. For the energy change value (ΔE) that accompanies the state transition, the acceptance probability p of the state transition is determined by the following function f(x) represented by an equation (1). An equation (2) is the metropolis method. An equation (3) is the Gibbs method.

(Equation 1)

$$p(\Delta E, T) = f\left( -\frac{\Delta E}{T} \right) \tag{1}$$

(Equation 2)

$$f_{metro}(x) = \min(1, e^x) \tag{2}$$

(Equation 3]

$$f_{Gibbs}(x) = \frac{1}{1 + e^{-x}} \tag{3}$$

Here, the symbol "T" is a parameter called a temperature value and is changed as follows. That is, the temperature value T is reduced logarithmically to the number of iterations t as expressed by the following equation.

(Equation 4)

$$T = \frac{T_0 \log(c)}{\log(t + c)} \tag{4}$$

Here, the symbol "$T_0$" is an initial temperature value, which needs to be large enough according to a problem. When using the acceptance probability represented by the equations (1) to (3), assuming that the state reaches the steady state after sufficient repetition, the occupancy probability of each state follows the Boltzmann distribution with respect to the thermal equilibrium state in thermodynamics. In addition, since the occupancy probability of a low energy state increases when the temperature is gradually lowered from the high temperature, the low energy state may be obtained when the temperature is sufficiently lowered. This method is called a simulated annealing method because it is similar to a state change when a material is annealed. At this time, the stochastic occurrence of a state transition in which energy rises corresponds to a thermal excitation in physics.

In the simulated annealing method as described above, an optimum solution may be obtained when the number of iterations is taken infinitely, but in reality, since it is necessary to obtain a solution with a limited number of iterations, the optimum solution may not be determined reliably. In the above equations, since the temperature drops slowly, the temperature does not drop sufficiently in a finite time. Therefore, in the actual simulated annealing method, the temperature is often lowered faster rather than the logarithmic temperature change.

Related techniques are disclosed in for example, Japanese Laid-open Patent Publication No. 2017-219948 and Japanese Laid-open Patent Publication No. 2016-051350. Furthermore, US 2018/107172 discloses an optimization apparatus including a state holding section that holds values of a plurality of state variables included in an evaluation function indicative of an energy; an energy calculation section that calculates an energy change of the energy for each of a plurality of state transitions in a case where each of the plurality of state transitions occurs according to a change in one of the values of the plurality of state variables; a temperature control section that controls a temperature; and a transition control section that adds, when stochastically determining based on the temperature, the energy change, and a random number whether to allow one of the plurality of state transitions according to a relative relationship between the energy change and a thermal excitation energy, an offset to the energy change and that exercises control so as to set the offset at a local minimum, at which the energy is locally minimized, to be larger than an offset at the time of the energy not being minimized.

It is an object in one aspect of the embodiments to provide an optimization device and a control method of the optimization device in which the convergence to the optimal solution is guaranteed and the deterioration of solution quality is suppressed, by bringing the energy distribution of the states in a search process as closer as possible to the Boltzmann distribution. The invention is defined by the appended claims.

SUMMARY

Aspects of the invention are set out in the accompanying claims.

BRIEF DESCRIPTION OF DRAWINGS

FIG. 1 is a view illustrating an example of a transition controller according to a first embodiment;
FIG. 2 is a view illustrating an example of a circuit configuration of a partial selector unit;
FIG. 3 is a view illustrating an operation flow of the transition controller.
FIG. 4 is a view illustrating an example of a transition controller according to a second embodiment;
FIG. 5 is a view illustrating an example of a partial selector unit;
FIG. 6 is a view illustrating an example (part 1) of a selection circuit unit;
FIG. 7 is a view illustrating an example of a selector;
FIG. 8 is a view illustrating an example (part 2) of a selection circuit unit;
FIG. 9 is a view illustrating an example of a first partial selector;
FIG. 10 is a view illustrating an example of a second partial selector;
FIG. 11 is a view illustrating a comparative example of the transition controller;
FIG. 12 is a view illustrating an example of distribution deviation due to sharing of thermal noise;
FIG. 13 is a view illustrating an example of improvement of deviation with respect to the Boltzmann distribution; and
FIG. 14 is a view illustrating a conceptual configuration of an optimization device by a simulated annealing method.

DESCRIPTION OF EMBODIMENTS

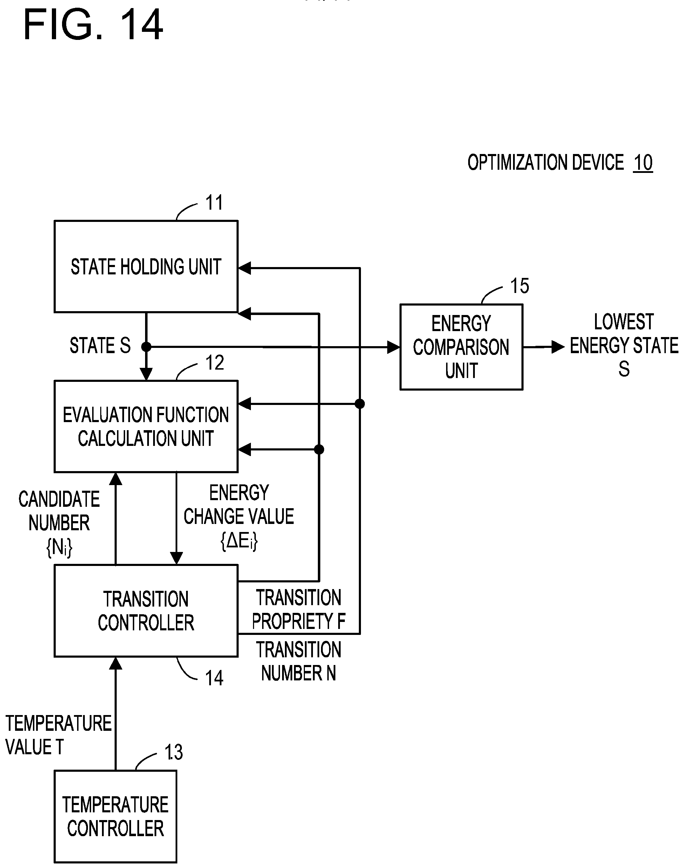

FIG. 14 illustrates a conceptual configuration of an optimization device by simulated annealing method. A case where a plurality of state transition candidates is generated will be described in the following description, but the basic simulated annealing method generates one transition candidate for each transition.

An optimization device 10 first includes a state holding unit 11 that holds the current state S (values of a plurality of state variables). The optimization device 10 further includes an evaluation function calculation unit 12 that calculates an energy change value $\{\Delta E_i\}$ of each state transition when a state transition from the current state S occurs due to a change in one of the values of the plurality of state variables. The optimization device 10 further includes a temperature controller 13 that controls a temperature value T, and a transition controller 14 that controls a state change. Based on the temperature value T, the energy change value $\{\Delta E_i\}$, and a random number value, the transition controller 14 determines stochastically whether to accept any of a plurality of state transitions according to a relative relationship between the energy change value $\{\Delta E_i\}$ and the thermal excitation energy. The optimization device 10 further includes an energy comparison unit 15 that identifies the lowest energy state S among the states generated by the state transitions.

The operation in one time iteration is as follows. First, the transition controller 14 generates one or more candidates (candidate number $\{Ni\}$) for state transition from the current state S held in the state holding unit 11 to the next state. The evaluation function calculation unit 12 calculates the energy change value $\{AE_i\}$ for each state transition mentioned as a candidate using the current state S and the state transition candidates. The transition controller 14 uses the temperature value T generated by the temperature controller 13 and a probability variable (random number value) generated by a random number generator in the transition controller 14 to permit the state transition with the acceptance probability of the above equations (1) to (3) in response to the energy change value $\{\Delta E_i\}$ of each state transition. Then, the transition controller 14 outputs transition propriety $\{fi\}$ indicating whether to accept each state transition (hereinafter, also referred to as propriety of state transition). When there are plural permitted state transitions, the transition controller 14 randomly selects one of the permitted state transitions using a random number value. Then, the transition controller 14 outputs the transition number N and transition propriety F of the selected state transition. When there are plural permitted state transitions, the value of the state variable stored in the state holding unit 11 is updated according to a selected state transition.

Starting from the initial state, the temperature controller 13 repeats the above one time repetition while lowering the temperature value, and the operation is ended when the number of repetitions reaches a certain number or when an end determination condition such as a condition that energy falls below a certain value is satisfied. An answer output by the optimization device 10 is the state at the end. However, in reality, since the temperature value does not become 0 with a finite number of iterations, the occupancy of the state has a distribution represented by the Boltzmann distribution, etc. even at the end, which is not necessarily an optimal value or a good solution. Therefore, it is a realistic solution to hold the lowest energy state obtained so far during the iteration and finally output the state.

Here, a mechanism that permits the state transition with the acceptance probability represented by the equations (1) to (3) by the transition controller 14 has not been described so far, and thus will be supplementarily described. A circuit that outputs 1 with an acceptance probability p and 0 with an acceptance probability (1-p) may be implemented by a comparator that has two inputs a and b, and outputs 1 when a>b and 0 when a<b, in which the acceptance probability p is input into the input a and a uniform random number taking a value of an interval [0, 1] is input into the input b. Therefore, the above function may be implemented by inputting, into the input a of the comparator, the value of the acceptance probability p calculated using the equation (1) from the energy change value and the temperature value T.

That is, when the symbol "f" is a function used in the equation (1) and the symbol "u" is a uniform random number taking a value of the interval [0, 1], the above function may be implemented in a circuit that outputs 1 when f($\Delta$E/T) is larger than u.

This may be left as it is, but the same function may be implemented even when the following modification is made. Even when the same monotonically increasing function is applied to two numbers, the magnitude relationship does not change. Therefore, the output of the comparator does not change even when the same monotonically increasing function is applied to the two inputs of the comparator. When the inverse function $f^{-1}$ of f is adopted as the monotonically increasing function, a circuit that outputs 1 when -$\Delta$E/T is larger than $f^{-1}(u)$ or when $\Delta$E/T is equal to or less than $f^{-1}(u)$ is sufficient. Further, since the temperature value T is positive, a circuit that outputs 1 when -$\Delta$E is larger than $Tf^{-1}(u)$ or when $\Delta$E is equal to or less than $Tf^{-1}(u)$ is sufficient. The transition controller 14 generates the uniform random number u and outputs a value of $f^{-1}(u)$ using a conversion table that converts the uniform random number u into a value of $f^{-1}(u)$. When the metropolis method is applied, $f^{-1}(u)$ is given by the following equation (5). When the Gibbs method is applied, $f^{-1}(u)$ is given by the following equation (6).

(Equation 5)

$$f_{metro}^{-1}(u) = \log(u) \qquad (5)$$

(Equation 6)

$$f_{Gibbs}^{-1}(u) = \log\left(\frac{u}{1-u}\right) \qquad (6)$$

In the above description, it has been explained that the optimization device may be obtained by using the Markov process in which the state transition is accepted based on the metropolis standard, etc. However, a sampling device is obtained which generates a state according to the Boltzmann distribution by outputting the state itself generated in the Markov process. The sampling device may be used to calculate an expectation value in machine learning and the like.

As described above, the transition controller determines whether to accept the target transition according to the relative relationship between the energy change value {$\Delta$E$_i$} and the thermal excitation energy based on the temperature value T, the energy change value {$\Delta$E$_i$}, and the random number value. In the basic simulated annealing method, the number of transition candidates is narrowed down to one by an appropriate method from the beginning, and then it is determined whether to accept the transition. In this case, the energy distribution of the states in a search process is guaranteed to be asymptotical to the Boltzmann distribution at that temperature when the temperature change is slow enough. However, by narrowing down the number of transition candidates to one, the probability of finding an acceptable transition in one search step becomes lower, which may cause a problem of the very large number of steps required to find a good solution.

In order to obtain a better solution faster, first, it is stochastically determined whether to accept each of a plurality of state transitions according to the above acceptance criteria, and when there are plural permitted state transitions, one of the permitted state transitions is selected.

At this time, the random numbers used to stochastically determine state transition acceptance propriety may be generated so as to be independent for all state transitions. However, for the purpose of restrictions on the circuit scale, improvement of the operation speed, etc., the transition controller may share a random number value for several state transition candidates and may determine whether to accept the state transition. In this case, depending on a method of selecting a state transition candidate by the transition controller, the occupancy probability of each state at each temperature may be largely deviated from the Boltzmann distribution. As a result, the convergence to the optimal solution may change and the quality of the solution may deteriorate.

Further, when sampling is performed using a state obtained by repeating a state transition at a constant temperature, there is a possibility that an error may become large when applied to an application that assumes the Boltzmann distribution due to a deviation from the Boltzmann distribution.

As may be understood from the above description, the optimization device according to the Boltzmann distribution using the Markov process may be used as a sampling device, and therefore, in the following, the optimization device will be described for simplicity.

In addition, not only the simulated annealing method described above but also a replica exchange method (also referred to as an exchange Monte Carlo method) that simultaneously performs the Markov process state transition with respect to a plurality of temperatures are effective for the optimization device or the sampling device using the Markov process, and the present disclosure may be applied as it is. However, for the sake of simplicity, the following description will be given of the simulated annealing method.

Hereinafter, embodiments will be described with reference to the drawings.

(First Embodiment)

A first embodiment will be described.

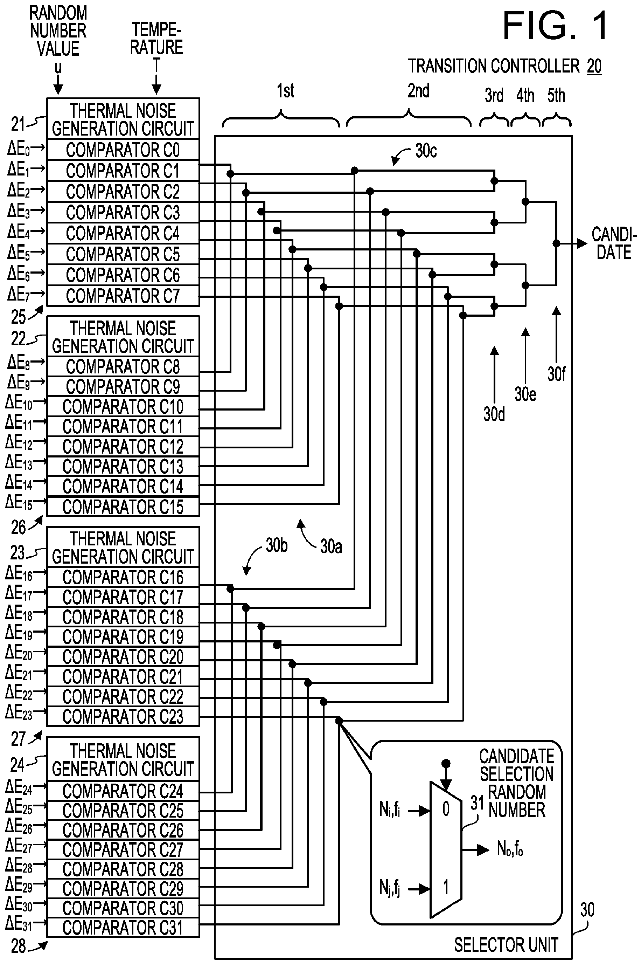

FIG. 1 is a view illustrating an example of a transition controller according to a first embodiment.

A transition controller 20 permits state transition with the acceptance probability of the above equations (1) to (3) according to the energy change value {$\Delta E_i$} of the state transition of each of a plurality of state variables. Then, the transition controller 20 outputs a transition propriety {$f_i$} indicating whether to accept each state transition. When there are plural permitted state transitions, the transition controller 20 randomly selects one of the permitted state transitions using a random number value. The transition controller 20 outputs a transition number (referred to as an index) and transition propriety F of the selected state transition.

Thus, the transition controller 20 may increase the transition probability by performing a parallel search on each of the plurality of state variables. For example, when the transition probability of state during parallel search in the optimization device 10 by simulated annealing method of N state variables is sufficiently small, the transition variable is about N times the transition probability with one state variable, as indicated by the equations (7) and (8).

(Equation 7)

$$P_{single} = \sum_{i}^{N} \frac{1}{N} A(\Delta E_i) \tag{7}$$

(Equation 8)

$$P_{parallel} = 1 - \prod_{i}^{N} \left( 1 - A(\Delta E_i) \right)$$

$$\approx \sum_{i}^{N} A(\Delta E_i) = N * P_{single} \tag{8}$$

Where, the symbol "N" is the number of state variables. $A(\Delta E_i)$ is an acceptance probability of transition of the i-th variable, which is sufficiently small. The symbol "$P_{single}$" is a transition probability when searching for one state variable alone. "$P_{parallel}$" is a transition probability when searching for N state variables in parallel.

In order to perform the parallel search, the transition controller 20 has the following circuit configuration. As an example, descriptions will be given with 32 state variables. One state variable is represented by one bit. In this case, the state variable may be called "bit", "spin bit", or the like. In this example, since only one bit is inverted as a transition candidate, the number of transition candidates is 32 which is the same as the number of bits, and a transition candidate number may be the same as an inverted bit. In the following description, it is assumed that a transition number is the same as an inverted bit number.

Further, in this example, a binary tree is used as a selection circuit that selects one transition from a plurality of transition candidates. The transition controller 20 includes thermal noise generation circuits 21, 22, 23, and 24, comparison circuit units 25, 26, 27, and 28, and a selector unit 30.

The thermal noise generation circuit 21 supplies thermal noise to the comparison circuit unit 25. The thermal noise generation circuit 22 supplies thermal noise to the comparison circuit unit 26. The thermal noise generation circuit 23 supplies thermal noise to the comparison circuit unit 27. The thermal noise generation circuit 24 supplies thermal noise to the comparison circuit unit 28.

The thermal noise corresponds to the above-mentioned thermal excitation energy and is calculated by $Tf^{-1}(u)$. As $f^{-1}(u)$, either of the equations (5) and (6) is used according to an application rule. As the temperature value $T$, a common temperature value $T$ is supplied from the temperature controller 13 to each of the thermal noise generation circuits 21, 22, 23, and 24. As the uniform random numbers $u$, independent uniform random numbers $u$ generated by a random number generator (not illustrated) are supplied to the thermal noise generation circuits 21, 22, 23, and 24, respectively. In the example of FIG. 1, the transition controller 20 generates four independent random numbers.

The comparison circuit units 25, 26, 27, and 28 receive, from the evaluation function calculation unit 12, the energy change value $\{\Delta E_i\}$ when each of the plurality of state variables is transitioned. The comparison circuit units 25, 26, 27, and 28 determine whether to accept each state transition based on $\{AE_i\}$, and output transition propriety $\{f_i\}$. Each of the comparison circuit units 25, 26, 27, and 28 includes eight (=32/4) comparators. The total number of all comparators included in the comparison circuit units 25, 26, 27, and 28 is 32.

Specifically, the comparison circuit unit 25 includes comparators C0, C, ..., C7. The comparison circuit unit 26 includes comparators C8, C9, ..., C15. The comparison circuit unit 27 includes comparators C16, C17, ..., C23. The comparison circuit unit 28 includes comparators C24, C25, ..., C31. A comparator Ci (i is an integer of 0 to 31 in the example of FIG. 1) receives $\Delta E_i$ and outputs transition propriety fi according to a determination based on $\Delta E_i$. In the determination by the comparator Ci, the energy change value $\Delta E_i$ is compared with the thermal noise.

The comparators C0, ..., C7 share the thermal noise generated by the thermal noise generation circuit 21 to determine whether to accept the state transition. It may be said that the thermal noise generation circuit 21 supplies the same thermal noise to the comparators C0, ..., C7 using the random number value $u$ generated by the random number generator corresponding to the thermal noise generation circuit 21.

The comparators C8, ..., C15 share the thermal noise generated by the thermal noise generation circuit 22 to determine whether to accept the state transition. The comparators C16, ..., C23 share the thermal noise generated by the thermal noise generation circuit 23 to determine whether to accept the state transition. The comparators C24, ..., C31 share the thermal noise generated by the thermal noise generation circuit 24 to determine whether to accept the state transition. In the example of FIG. 1, one thermal noise (or one random number value) is shared for eight comparators. It may also be said that one thermal noise (or one random number value) is shared for eight state transitions or eight energy change values.

The selector unit 30 selects and outputs one of a plurality of state transition candidates according to the relative relationship between thermal excitation energy (thermal noise) based on a random number value and a temperature value shared for a predetermined number of energy change values, and an energy change value. The selector unit 30 has an n-stage (n is an integer of 2 or more) selector tree that performs the selection. In the example of FIG. 1, n = 5.

The first stage of the selector tree includes partial selector units 30a and 30b. The second stage of the selector tree includes a partial selector unit 30c. The third stage of the selector tree includes a partial selector unit 30d. The fourth stage of the selector tree includes a partial selector unit 30e. The fifth stage of the selector tree includes a partial selector unit 30f.

Each of the partial selector units 30a, 30b, ..., 30f includes, for example, a plurality of selectors that select and output one of two inputs according to a selection random number. A selector 31 is one of the plurality of selectors, and the other selectors have the same configuration as the selector 31. Two inputs to the selector 31 are identification values $N_i$ and $N_j$ that identify transition numbers of i and j, and transition propriety information $f_i$ and $f_j$. The outputs of the selector 31 are the propriety information $f_0$ obtained as the logical sum of the transition propriety information $f_i$ and $f_j$, and an identification value $N_0$ that identify a transition number of i or j, whichever is selected. Further, when one of the transition propriety information $f_i$ and $f_j$ is 1 (acceptable) and the other is 0 (unacceptable), the acceptable one is always selected, and when both are 1, one of the transition propriety information $f_i$ and $f_j$ is selected by a selection signal. When both are 0, it does not matter what to select. Then, the identification value $N_0$ of the transition selected by the selection result is generated and output. In this case, a one-bit identification value is generated by the first stage selector, the bit length of the identification value is increased by 1 bit each time the stage goes through, and a 5-bit index is generated and output in the final stage (the selector of the partial selector unit 30f).

Specifically, in the example of FIG. 1, since the transitions having numbers separated by 8 are compared in the first partial selector units 30a and 30b at the first stage, bit 3 of the index is generated. Similarly, bit 4 is generated at the second stage, bit 0 is generated at the third stage, bit 1 is generated at the fourth stage, and bit 2 is generated at the fifth stage. When a result obtained by adding the generated bit to an identification value of the selected transition is output, an index representing the finally selected transition number is obtained.

Selectors other than the selector 31 are abbreviated in FIG. 1. A portion represented by a black circle in FIG. 1 corresponds to one selector. Each of the partial selector units 30a, 30b, and 30c includes eight selectors. The partial selector unit 30d includes four selectors. The partial selector unit 30e includes two selectors.

As illustrated in FIG. 1, the transition controller 20 performs a parallel search for state transition and a thermal noise sharing, and uses the binary tree structure of selectors of all comparator outputs as a knockdown method (or also called a tournament method) to narrow down the number of state transition candidates to one. The transition controller 20 is arranged such that candidates sharing thermal noise do not contact each other in the initial stage of the n-stage selector tree in the selector unit 30. In this example, the first and second stages form a first partial selector group which selects one intermediate candidate from four transition candidates using four independent random numbers. The third to fifth stages form a second partial selector that selects one transition from eight intermediate candidates.

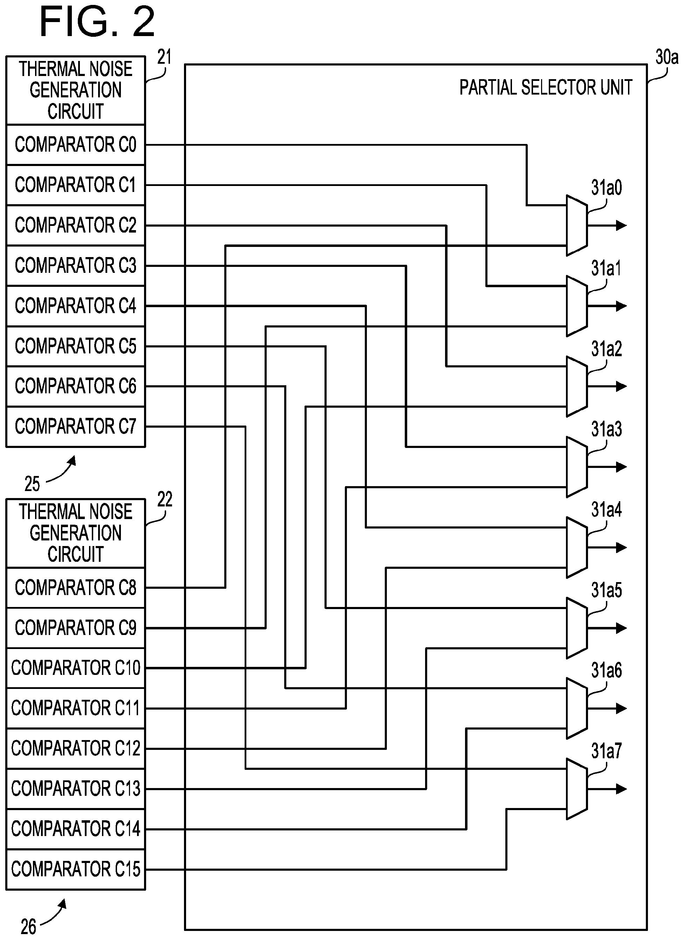

Next, a circuit configuration example in which a selector in the partial selector unit 30a is specified will be described. FIG. 2 is a view illustrating an example of the circuit configuration of a partial selector unit. The partial selector unit 30a includes selectors 31a0, 31a1, ..., 31a7 corresponding to the selector 31.

The transition propriety (or transition propriety information) $f_0$ and the identification value output from the comparator C0 and the transition propriety $f_8$ and the identification value output from the comparator C8 are input to the selector 31a0. The transition propriety $f_1$ and the identification value output from the comparator C1 and the transition propriety $f_9$ and the identification value output from the comparator C9 are input to the selector 31a1. The transition propriety $f_2$ and the identification value output from the comparator C2 and the transition propriety $f_{10}$ and the identification value output from the comparator C10 are input to the selector 31a2. The transition propriety $f_3$ and the identification value output from the comparator C3 and the transition propriety $f_{11}$ and the identification value output from the comparator C11 are input to the selector 31a3. The transition propriety $f_4$ and the identification value output from the comparator C4 and the transition propriety $f_{12}$ and the identification value output from the comparator C12 are input to the selector 31a4. The transition propriety $f_5$ and the identification value output from the comparator C5 and the transition propriety $f_{13}$ and the identification value output from the comparator C13 are input to the selector 31a5. The transition propriety $f_6$ and the identification value output from the comparator C6 and the transition propriety $f_{14}$ and the identification value output from the comparator C14 are input to the selector 31a6. The transition propriety $f_7$ and the identification value output from the comparator C7 and the transition propriety $f_{15}$ and the identification value output from the comparator C15 are input to the selector 31a7. The outputs of the selectors 31a0, ..., 31a7 are input to eight different selectors in the partial selector unit 30c.

Like the partial selector unit 30a, the partial selector units 30b, ..., 30f are also implemented by selectors corresponding to the selector 31. In particular, like the eight selectors of the partial selector unit 30a, two transition proprieties determined by different thermal noises are input to each of the eight selectors of the partial selector unit 30b. The outputs of the eight selectors of the partial selector unit 30a are input to eight different selectors of the partial selector unit 30c.

For this reason, in the example of FIG. 1, candidates sharing thermal noise do not contact each other from the first stage to the second stage of the 5-stage selector tree. Candidates sharing thermal noise may contact each other from the third stage of the 5-stage selector tree.

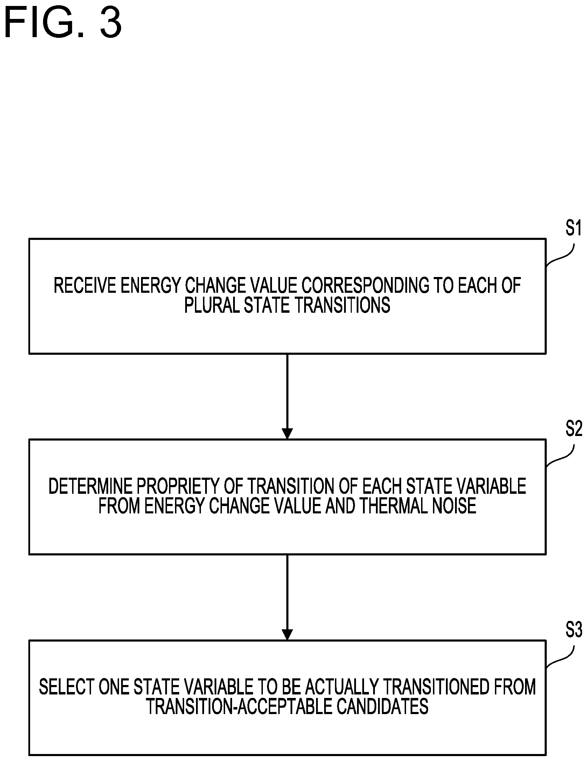

Next, an operation flow of the transition controller 20 will be described. FIG. 3 is a view illustrating an operation flow of the transition controller. (S1) The transition controller 20 receives the energy change value $\{\Delta E_i\}$ corresponding to each of the plurality of state transitions.

(S2) The transition controller 20 determines the propriety of each state transition from the energy change value $\{\Delta E_i\}$ and the thermal noise. At this time, thermal noise is shared for a predetermined number of energy change values to determine the propriety of each state transition.

(S3) The transition controller 20 selects one transition to be actually adopted from the transition-acceptable candidates. The transition controller 20 outputs an index corresponding to the selected state transition and a transition propriety F.

Then, the state holding unit 11 changes the value of the state variable held by the state holding unit 11 based on one state transition selected by the transition controller 20. The evaluation function calculation unit 12 calculates the energy of the state after the current state transition and outputs the calculated energy to the energy comparison unit 15. In addition, the evaluation function calculation unit 12 calculates an energy change value corresponding to each of the plurality of state transitions, and outputs the calculated energy change value to the transition controller 20. The transition controller 20 repeatedly executes the steps S1 to S3. For example, assuming that the number of temperature changes is N1 and the number of trials of state transition for each temperature is N2, the number of repetitions is N1*N2. Based on the energy calculated by the evaluation function calculation unit 12, the energy comparison unit 15 holds the lowest energy among a plurality of energies obtained in iterations until then and the value of a state variable corresponding to the lowest energy, and outputs the lowest energy and the value of a state variable corresponding thereto as a solution when the iteration is completed.

In the step S3, the transition controller 20 selects one intermediate candidate from a state transition candidate group corresponding to the random number values generated by different random number generators, by the first partial selector, that is, each of a plurality of first partial selector trees (an example of the plurality of first selection circuits) of the first to the m-th stages (m is an integer of 1 or more and n or less) in the n-stage selector tree. In the example of FIG. 1, the transition controller 20 has eight first partial selector trees from the first stage to the second stage. The transition controller 20 selects one state transition from a plurality of intermediate candidates by the second partial selector, that is, the second partial selector tree (an example of the second selection circuit) of the (m+1)-th and subsequent stages in the n-stage selector tree. In the example of FIG. 1, the transition controller 20 has a second partial selector tree from the third stage to the fifth stage. A total of eight intermediate candidates are selected by each of the first partial selector trees, and one of the eight intermediate candidates is selected by the second partial selector tree. In this manner, the transition controller 20 prevents the candidates sharing thermal noise from contacting each other in at least the first stage (initial stage) selector tree.

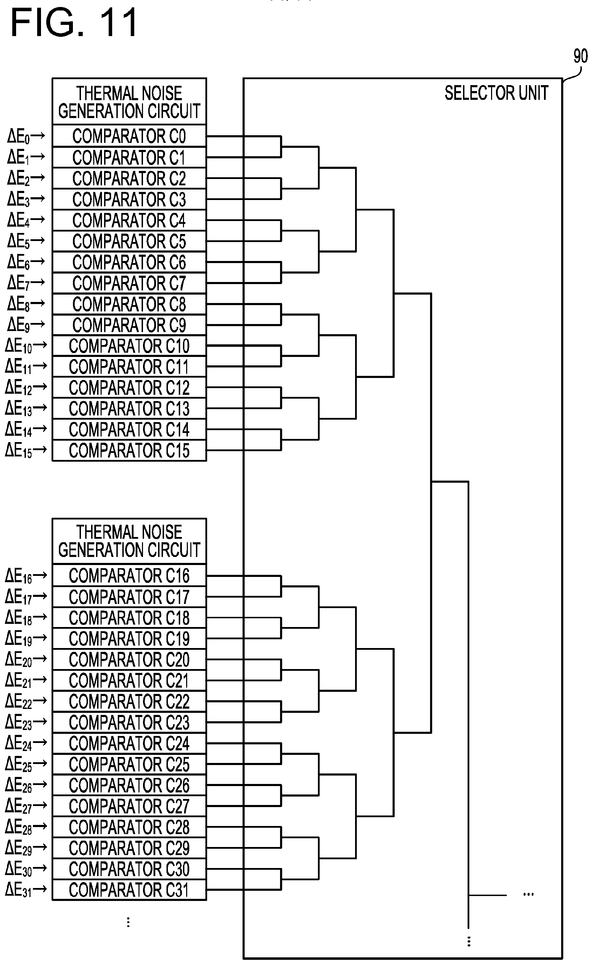

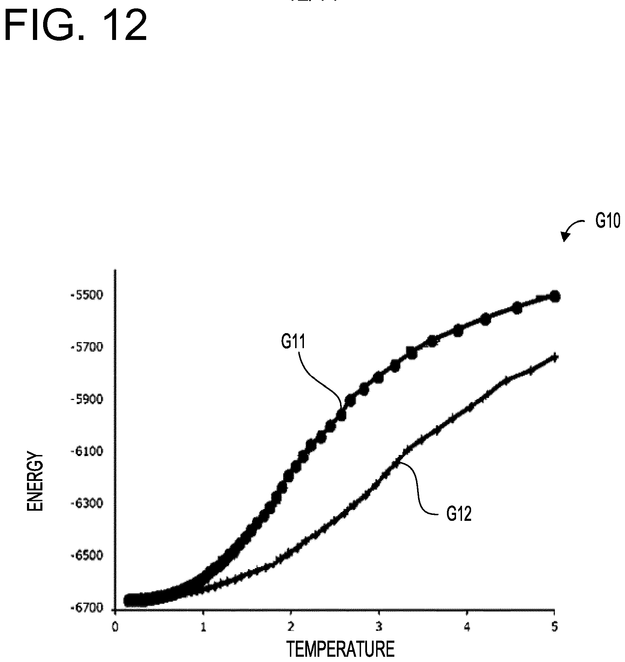

For example, a selection method of contacting candidates sharing thermal noise each other in the initial stage may be considered. However, when this selection method is used, as will be described later with reference to FIGs. 11 and 12, the occupancy probability of each state at each temperature largely deviates from the Boltzmann distribution, resulting in a change in convergence characteristic and deterioration in solution quality. This is because, due to the sharing of thermal noise, when a state variable having a low transition probability becomes a transition candidate, many candidates are likely to stand from the same mountain (set of comparators sharing thermal noise) and it becomes difficult to select a transition candidate having low transition probability when the candidates sharing thermal noise contact each other in the initial state.

Therefore, as described above, the transition controller 20 causes the selector unit 30 to prevent the candidates sharing thermal noise from contacting each other in the initial stage of the n-stage selector tree, thereby reducing deviation of occupancy probability of each state at each temperature from the Boltzmann distribution. As a result, it is possible to suppress the change in convergence characteristic and the deterioration of solution quality by the optimization device 10.

Here, the optimization device 10 according to the Boltzmann distribution using the Markov process may be used as a sampling device. That is, the sampling device may be implemented by the same configuration as the optimization device 10. The sampling device selects and outputs a state from a state space with a probability according to the energy of the state.

[Second Embodiment]

Next, a second embodiment will be described. The second embodiment exemplifies the use of 1024 state variables. As the number of state variables in the optimization device 10 increases, the optimization device 10 may be used to calculate a larger optimization problem.

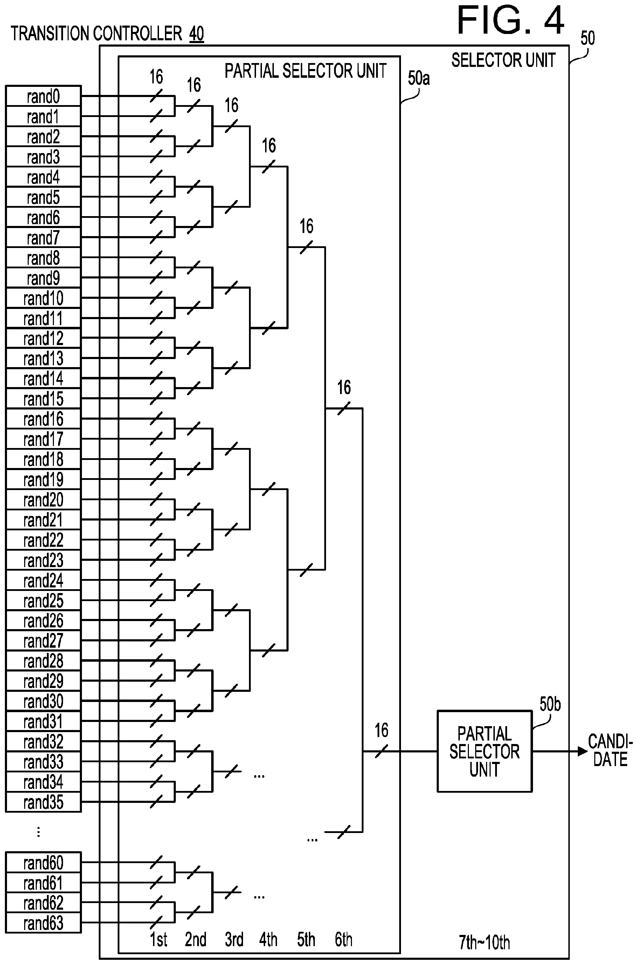

FIG. 4 is a view illustrating an example of a transition controller according to the second embodiment. In this example, the transition controller 40 shares one thermal noise for 16 comparators. That is, one random number value is shared by 16 comparators. In FIG. 4, one thermal noise generation circuit and 16 comparators are combined and abbreviated by a combination of a character string of "rand" such as "rand0" and a numerical value (*e.g.,* "0"). Hereinafter, a circuit combining one thermal noise generation circuit and 16 comparators will be referred to as a "comparison block". The transition controller 40 has 64 comparison blocks.

The transition controller 40 has a 10-stage selector tree. The 10-stage selector tree includes a partial selector unit 50a and a partial selector unit 50b. The partial selector unit 50a is a selector group from the first stage to the sixth stage. In the partial selector unit 50a, only independent thermal noise candidates contact each other. The partial selector unit 50b is a selector group from the seventh stage to the tenth stage. In the partial selector unit 50b, shared thermal noise candidates may contact each other.

The transition controller 40 performs a parallel search for state transition and a thermal noise sharing, and narrows down all comparator outputs to one by a knockdown method (or a tournament method) using a binary tree structure of selectors. In the example of FIG. 4, the description of the selectors is omitted.

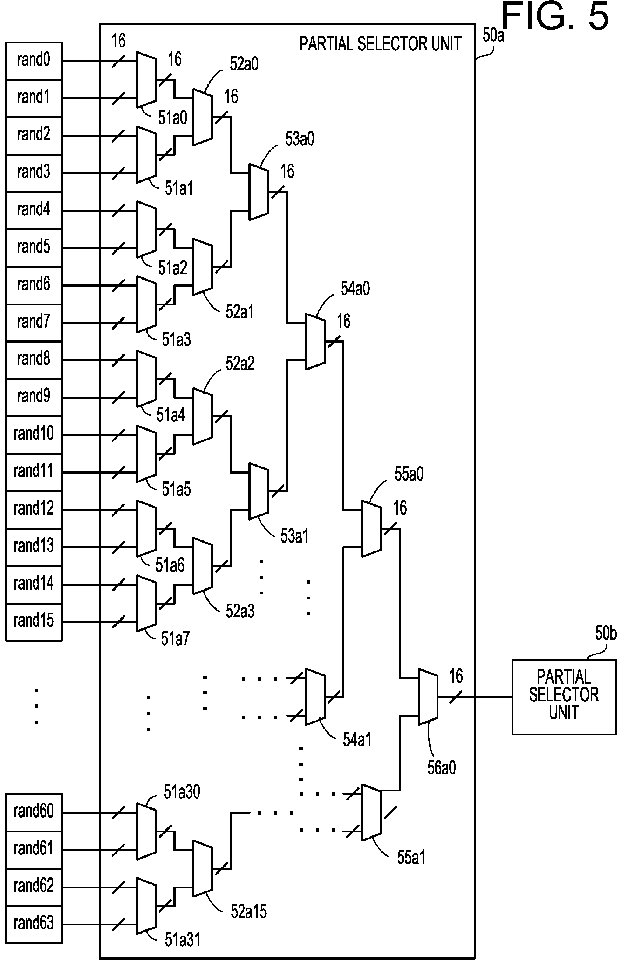

FIG. 5 is a view illustrating an example of a partial selector unit. The partial selector unit 50a includes 63 selection circuit units. One selection circuit unit includes 16 selectors.

The partial selector unit 50a includes 32 selection circuit units 51a0, 51a1, ..., 51a31 in the first stage. In the selection circuit unit 51a0, 16 transition proprieties $f_0$ to $f_{15}$ of a comparison block rand0 and 16 transition proprieties $f_{16}$ to $f_{31}$ of a comparison block rand1 are input. In the selection circuit unit 51a1, 16 transition proprieties $f_{32}$ to $f_{47}$ of a

comparison block rand2 and 16 transition proprieties $f_{48}$ to $f_{63}$ of a comparison block rand3 are input. Similarly, transition proprieties from two comparison blocks are input to each of the selection circuit units 51a2, ..., 51a31.

The partial selector unit 50a includes 16 selection circuit units 52a0, 52a1, ..., 52a15 in the second stage. In the selection circuit unit 52a0, 16 transition proprieties and identification values from the selection circuit unit 51a0, and 16 transition proprieties and identification values from the selection circuit unit 51a1 are input. In the selection circuit unit 52a1, 16 transition proprieties and identification values from the selection circuit unit 51a2, and 16 transition proprieties and identification values from the selection circuit unit 51a3 are input. Similarly, transition proprieties and identification values from two selection circuit units in the first stage are input to each of the selection circuit units 52a2, ..., 52a15.

The partial selector unit 50a includes 8 selection circuit units 53a0, 53a1, ..., 53a7 in the third stage (in FIG. 5, the units after the selection circuit unit 53a2 are omitted). In the selection circuit unit 53a0, 16 transition proprieties and identification values from the selection circuit unit 52a0, and 16 transition proprieties and identification values from the selection circuit unit 52a1 are input. In the selection circuit unit 53a1, 16 transition proprieties and identification values from the selection circuit unit 52a2, and 16 transition proprieties and identification values from the selection circuit unit 52a3 are input. Similarly, transition proprieties and identification values from two selection circuit units in the second stage are input to each of the selection circuit units 53a2, ..., 53a7.

The partial selector unit 50a includes 4 selection circuit units 54a0, 54a1, 54a2, and 54a4 in the fourth stage (in FIG. 5, the selection circuit units 54a2 and 54a4 are omitted). In the selection circuit unit 54a0, 16 transition proprieties and identification values from the selection circuit unit 53a0, and 16 transition proprieties and identification values from the selection circuit unit 53a1 are input. In the selection circuit unit 54a1, 16 transition proprieties and identification values from the selection circuit unit 53a2, and 16 transition proprieties and identification values from the selection circuit unit 53a3 are input. Similarly, transition proprieties and identification values from two selection circuit units in the third stage are input to each of the selection circuit units 54a2 and 54a3.

The partial selector unit 50a includes 2 selection circuit units 55a0 and 55a1 in the fifth stage. In the selection circuit unit 55a0, 16 transition proprieties and identification values from the selection circuit unit 54a0, and 16 transition proprieties and identification values from the selection circuit unit 54a1 are input. In the selection circuit unit 55a1, 16 transition proprieties and identification values from the selection circuit unit 54a2, and 16 transition proprieties and identification values from the selection circuit unit 54a3 are input.

The partial selector unit 50a includes one selection circuit unit 56a0 in the sixth stage. In the selection circuit unit 56a0, 16 transition proprieties and identification values from the selection circuit unit 55a0, and 16 transition proprieties and identification values from the selection circuit unit 55a1 are input.

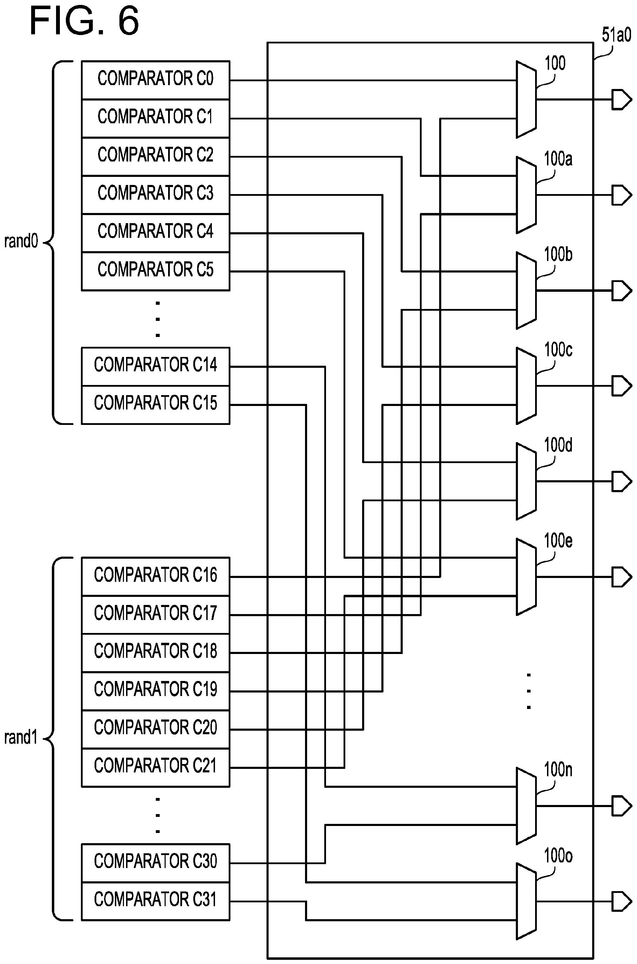

FIG. 6 is a view illustrating an example (part 1) of a selection circuit unit. Here, although a circuit configuration example of the selection circuit unit 51a0 will be described, the selection circuit units 51a1, ..., 51a31 also have the same circuit configuration. It is assumed that the comparison block rand0 includes comparators C0, C1, ..., C15. It is assumed that the comparison block rand1 includes comparators C16, C17, ..., C31.

The selection circuit unit 51a0 includes 16 selectors 100, 100a, ..., 100n and 100o. A transition propriety and an identification value from one comparator belonging to the comparison block rand0, and a transition propriety and an identification value from one comparator belonging to the comparison block rand1 are input to each of the selectors 100, ..., 100o.

For example, a transition propriety $f_0$ and an identification value output from the comparator C0, and a transition propriety $f_{16}$ and an identification value output from the comparator C16 are input to the selector 100. A transition propriety $f_1$ and an identification value output from the comparator C1, and a transition propriety $f_{17}$ and an identification value output from the comparator C17 are input to the selector 100a. Similarly, two transition proprieties and identification values output from two comparators using different thermal noises are also input to the selectors 100b, ..., 100o.

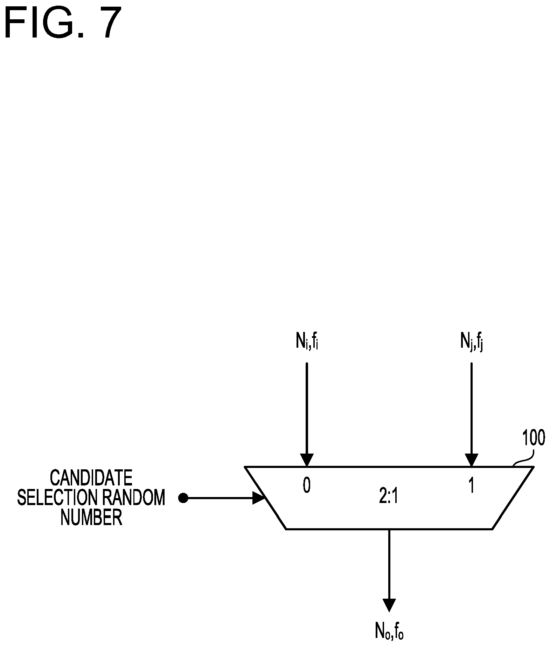

In this manner, for the selectors of the first stage selection circuit units 51a0, ..., 51a31 of the partial selector unit 50a, only independent thermal noise candidates are allowed to contact each other. FIG. 7 is a view illustrating an example of a selector.

Here, the selector 100 is exemplified. However, the other selectors have the same configuration as that of the selector 100. The selector 100 receives two inputs. The inputs are two signals indicating a set of transition propriety $f_i$ and identification value $N_i$ and a set of transition propriety $f_j$ and identification value $N_j$. The selector 100 also receives a candidate selection random number. The selector 100 selects one of the transition proprieties $f_i$ and $f_j$ based on the candidate selection random number, and outputs a transition propriety $f_0$ representing the selected one and an identification value $N_0$ corresponding to the selected transition propriety. When only one of the transition proprieties $f_i$ and $f_j$ indicates that transition is possible, the selector 100 preferentially selects the one that transition is possible. A selection method by the selector 100 is the same as the above-described selection method by the selector 31.

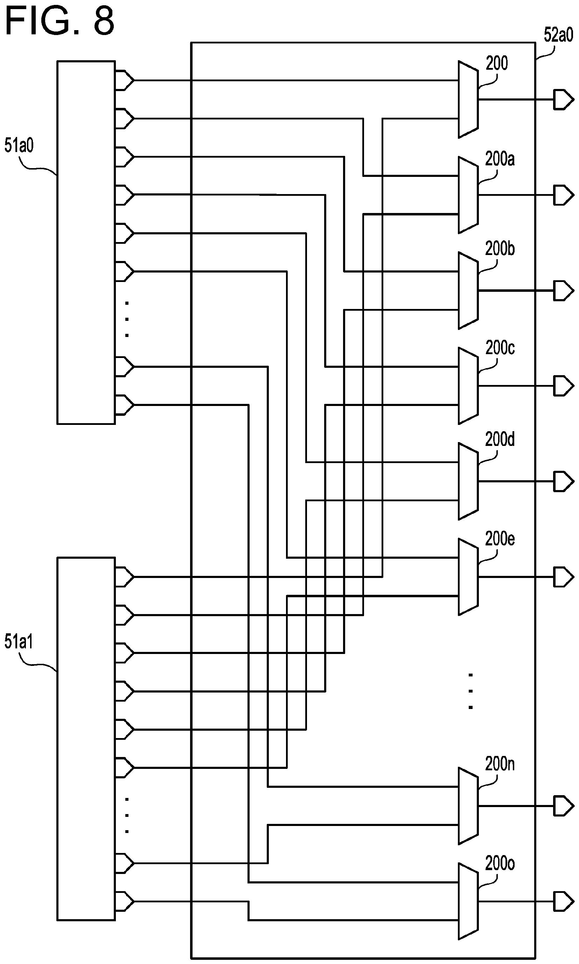

FIG. 8 is a view illustrating an example (part 2) of the selection circuit unit. Here, although a circuit configuration example of the selection circuit unit 52a0 will be described, the selection circuit units 52a1, ..., 56a0 also have the same circuit configuration. The selection circuit unit 52a0 includes 16 selectors 200, 200a, ..., 200n and 200o. One of 16 transition proprieties and identification values output from the selection circuit unit 51a0, and one of 16 transition proprieties and identification values output from the selection circuit unit 51a1 are input to each of the selectors 200, ..., 200o. In this manner, for the selectors of the selection circuit units of the second and subsequent stages of the partial selector unit 50a, only independent thermal noise candidates are allowed to contact each other.

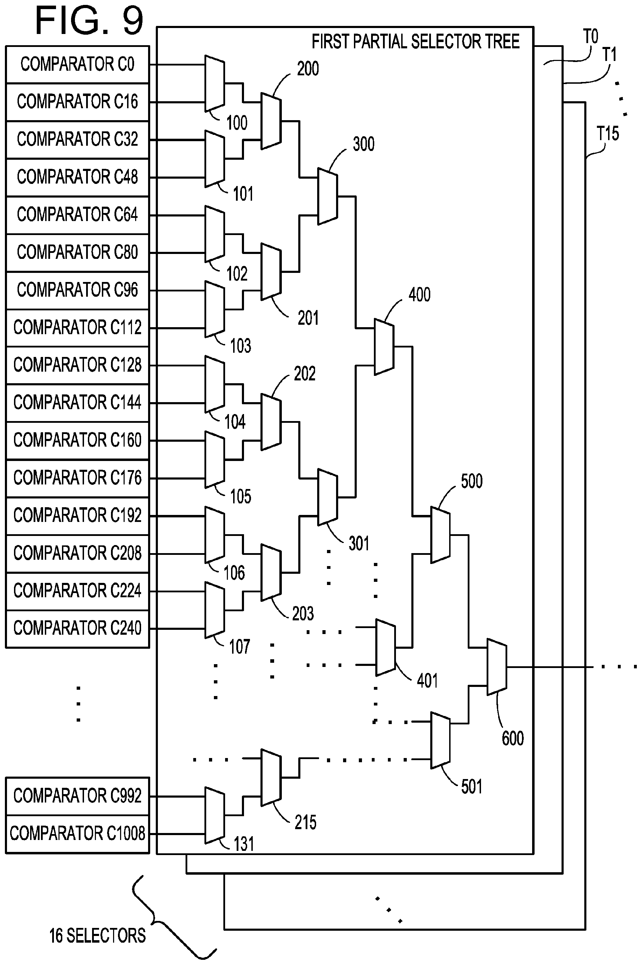

According to the circuit configuration of the selector unit 50 in the transition controller 40, it may be said that the transition controller 40 has the following 16 first partial selector trees. FIG. 9 is a view illustrating an example of the first partial selector.

The transition controller 40 has 16 first partial selector trees T0, T1, ..., T15. The first partial selector trees T1, ..., T15 are an example of a plurality of first selection circuits. Although the following description focuses on the first partial selector tree T0, the first partial selector trees T1, ..., T15 also have the same selector configuration as the first partial selector tree T0. Comparators C0, C16, C32, C48, ..., C1008 (64 comparators) connected to the first partial selector tree T0 belong to different comparison blocks (comparison blocks rand0, ..., rand63).

The first partial selector tree T0 includes first stage selectors 100, 101, ..., 131, second stage selectors 200, 201, ..., 215, third stage selectors 300, 301, ..., 307 (the selector 307 is not illustrated), fourth stage selectors 400, 401, ..., 403 (the selector 403 is not illustrated), fifth stage selectors 500 and 501, and a sixth stage selector 600.

A transition propriety $f_0$ and an identification value output from the comparator C0, and a transition propriety $f_{16}$ and an identification value output from the comparator C16 are input to the selector 100. A transition propriety $f_{32}$ and an identification value output from the comparator C32, and a transition propriety $f_{48}$ and an identification value output from the comparator C48 are input to the selector 101. A transition propriety $f_{64}$ and an identification value output from the comparator C64, and a transition propriety fso and an identification value output from the comparator C80 are input to the selector 102. Similarly, candidates determined by independent thermal noises are input to the first stage selectors 103, ..., 131. The number of selectors 100, ..., 131 is 32.

The transition propriety and the identification value selected by the selector 100, and the transition propriety and the identification value selected by the selector 101 are input to the selector 200. The transition propriety and the identification value selected by the selector 102, and the transition propriety and the identification value selected by the selector 103 are input to the selector 201. The transition propriety and the identification value selected by the selector 104, and the transition propriety and the identification value selected by the selector 105 are input to the selector 202. Similarly, the narrowing-down results of the candidates determined by the independent thermal noises are input to the second stage selectors 203, ..., 215. The number of selectors 200, ..., 215 is 16.

The transition propriety and the identification value selected by the selector 200, and the transition propriety and the identification value selected by the selector 201 are input to the selector 300. The transition propriety and the identification value selected by the selector 202, and the transition propriety and the identification value selected by the selector 203 are input to the selector 301. Similarly, the narrowing-down results of the candidates determined by the independent thermal noises are input to the third stage selectors 302, ..., 307. The number of selectors 300, ..., 307 is 8.

The transition propriety and the identification value selected by the selector 300, and the transition propriety and the identification value selected by the selector 301 are input to the selector 400. The transition propriety and the identification value selected by the selector 302, and the transition propriety and the identification value selected by the selector 303 are input to the selector 401. Similarly, the narrowing-down results of the candidates determined by the independent thermal noises are input to the fourth stage selectors 402 and 403. The number of selectors 400, 401, 402, and 403 is 4.

The transition propriety and the identification value selected by the selector 400, and the transition propriety and the identification value selected by the selector 401 are input to the selector 500. The transition propriety and the identification value selected by the selector 402, and the transition propriety and the identification value selected by the selector 403 are input to the selector 501.

The transition propriety and the identification value selected by the selector 500, and the transition propriety and the identification value selected by the selector 501 are input to the selector 600. The selector 600 selects one intermediate candidate from two inputs and outputs the selected intermediate candidate.

According to the first partial selector trees T0, T1, ..., T15, 16 intermediate candidates are output as the narrowing-down results of the candidates determined by the independent thermal noises. The 16 intermediate candidates are narrowed down to one candidate by the second partial selector tree in the partial selector unit 50b.

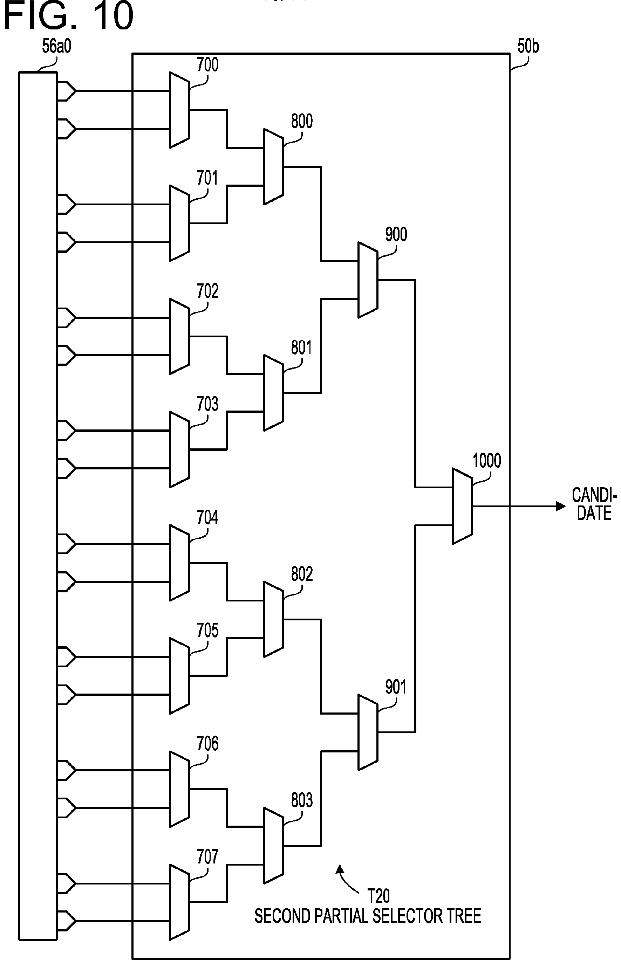

FIG. 10 is a view illustrating an example of the second partial selector. The partial selector unit 50b includes a second partial selector tree T20. The second partial selector tree T20 is an example of a second selection circuit. Here, the number of stages of selectors in the second partial selector tree T20 is described as the number of stages following the sixth stage in the first partial selector trees T0, ..., T15.

The second partial selector tree T20 includes seventh stage selectors 700, 701, ..., 707, eighth stage selectors 800, 801, 802 and 803, ninth stage selectors 900 and 901, and a tenth stage selector 1000.

Two intermediate candidates output by two selectors belonging to the selection circuit unit 56a0 are input to each of the selectors 700, ..., 707. Two intermediate candidates selected by the previous stage two selectors are input to each of the selectors 800, 801, 802, and 803. For example, the intermediate candidate selected by the previous stage selector 700 and the intermediate candidate selected by the previous stage selector 701 are input to the selector 800.

Two intermediate candidates output by the previous stage two selectors are input to each of the selectors 900 and 901. For example, the intermediate candidate selected by the previous stage selector 800, and the intermediate candidate selected by the previous stage selector 801 are input to the selector 900.

The intermediate candidate selected by the selector 900, and the intermediate candidate selected by the selector 901 are input to the selector 1000. The selector 1000 selects one state transition from the two intermediate candidates and outputs the selected one state transition.

In each selector of the second partial selector tree T20, candidates sharing thermal noise and having determined transition propriety may contact each other. Each of the selectors belonging to the selector unit 50 generates and outputs a one-bit identification value that identifies a selected state variable together with the generation of the transition propriety $f_i$ and the selection of the identification value. Therefore, the bit length of the identification value is increased by 1 bit each time the stage goes through, and a 10-bit index is generated and output in the final stage (the selector 1000).

As described above, the transition controller 40 prevents candidates sharing thermal noise from contacting each other in at least the first stage (initial stage) of the selector tree. Here, for example, a selection method of contacting candidates sharing thermal noise each other in the initial stage may be also considered as follows.

FIG. 11 is a view illustrating a comparative example of the transition controller. In the comparative example, as in the second embodiment, it is assumed that the number of state variables is 1024 and thermal noise is shared by 16 comparators. The transition controller of the comparative example includes a selector unit 90. In a selector tree of the selector unit 90, in selectors from the first stage to the fourth stage, candidates sharing thermal noise and having determined transition propriety contact each other. However, in this case, the occupancy probability of each state at each temperature largely deviates from the Boltzmann distribution, and the solution quality deteriorates, as will be described in detail below.

FIG. 12 is a view illustrating an example of deviation of distribution due to sharing of thermal noise. A graph G10 represents deviation from the Boltzmann distribution due to sharing of thermal noise. The horizontal axis of the graph G10 represents temperature. The vertical axis of the graph G10 represents energy (average energy).

A series G11 represents the relationship between temperature and energy when thermal noise is not shared. The series G11 may be said to be the relationship between temperature and energy when the occupancy probability of each state at each temperature follows the Boltzmann distribution.

A series G12 represents the relationship between temperature and energy when thermal noise is shared, corresponding to the comparative example of FIG. 11. According to the series G12, it may be seen that the sharing of thermal noise makes the average energy of possible states much lower than the average energy expected for the Boltzmann distribution. Thus, when a state represented by a plurality of state variables is not generated according to the Boltzmann distribution, the quality of a solution obtained by the optimization device 10 is deteriorated. Alternatively, it may be said that the reliability of the solution is reduced because a state is not generated according to a distribution that is relied upon for solution derivation (*i.e.,* the Boltzmann distribution).

The reason for the deviation from the Boltzmann distribution due to the sharing of thermal noise may be considered as follows. Due to the sharing of thermal noise, when a state variable having a low transition probability becomes a transition candidate, many candidates are likely to stand from the same mountain (set of comparators sharing thermal noise). For this reason, it becomes difficult to select a transition candidate having low transition probability when the candidates sharing thermal noise contact each other in the initial state and the occupancy probability of the state after the transition by the transition candidate deviates from the Boltzmann distribution.

Therefore, as described above, in the selector unit 50, the transition controller 40 causes candidates that do not share thermal noise to contact each other in the initial stage of the n-stage selector tree, and causes candidates that share thermal noise to contact each other.

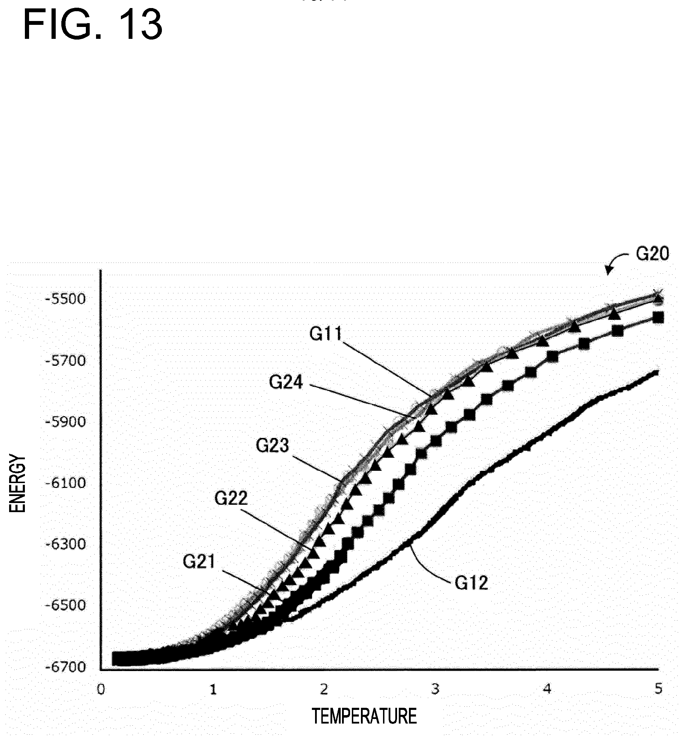

FIG. 13 is a view illustrating an example of improvement of the deviation from the Boltzmann distribution. A graph G20 represents an example of improvement of the deviation from the Boltzmann distribution in the second embodiment. The horizontal axis of the graph G20 represents temperature. The vertical axis of the graph G20 represents energy (average energy).

The graph G20 includes the series G11 and G12 illustrated in FIG. 12. A series G21 indicates the relationship between temperature and average energy when candidates of independent thermal noises contact each other only in the initial stage (first stage). A series G22 indicates the relationship between temperature and average energy when candidates of independent thermal noises contact each other from the first stage to the second stage. A series G23 indicates the relationship between temperature and average energy when candidates of independent thermal noises contact each other from the first stage to the third stage. A series G24 indicates the relationship between temperature and average energy when candidates of independent thermal noises contact each other from the first stage to the fourth stage.

According to the series G21, the deviation from the Boltzmann distribution is reduced more than that of the series G12 simply by making the independent thermal noise candidates contacting each other in the first stage. Further, the deviation from the Boltzmann distribution is greatly improved with the increase in the number of stages of the second stage, the third stage, and the fourth stage as well as the first stage, and the initial stage not making common thermal noise candidates contacting each other. In the case of this example, the deviation from the Boltzmann distribution is improved to 1/10 or less by setting the number of stages of the initial stage not making common thermal noise candidates contacting each other to four or more. Thus, by reducing the deviation from the Boltzmann distribution, it is possible to suppress a change in the convergence characteristic and a deterioration of the solution quality. In addition, the decrease in the reliability of the solution may be suppressed.

For example, a case may be considered where thermal noise (or a random number value) is shared for $2^k$ (k is an integer of 1 or more) energy change values (or comparators). In this case, among the n-stage selector trees, candidates of independent thermal noises are made to contact each other from the first stage to the (n-k)-th stage, and candidates of common thermal noises are not made to contact each other. As a result, it is possible to minimize the probability of contact between candidates standing from the same mountain (candidates of common thermal noises), which may result in the maximum improvement effect of the deviation from the Boltzmann distribution.

In the above example, a selector that selects and outputs one of two inputs is exemplified as the selector used for the transition controllers 20 and 40, but it may be a selector that selects and outputs one of three or more inputs. Also, in this case, it is possible to suppress the change in the convergence characteristic and the deterioration in the solution quality by making the independent thermal noise candidates contacting each other at least in the first stage of the selector tree by the selector. For example, using a selector that selects and outputs one of q (q is an integer of 3 or more) inputs, thermal noise (or a random number value) may be shared for $q^k$ energy change values. Also, in this case, among the n-stage selector trees, candidates of independent thermal noises are made to contact each other from the first stage to the (n-k)-th stage, and candidates of common thermal noises are not made to contact each other.

In the first and second embodiments, each of the first and second partial selectors is arranged as a binary tree. However, the same effects may be obtained with other configuration methods as long as the configuration methods may select one of acceptable transition candidates randomly and reliably and output the transition number thereof.

Further, the present disclosure may be used for an optimization device and a sampling device using not only the simulated annealing method in which the temperature is slowly lowered but also a replica exchange method in which a plurality of temperatures is searched for.

According to the embodiments, the convergence to the optimal solution may be guaranteed and the deterioration of solution quality may be suppressed, by bringing the energy distribution of the states in a search process sufficiently closer to the Boltzmann distribution that is theoretically expected. As the deviation from the Boltzmann distribution is reduced, a theoretical analysis, a simulation, a review compared to a non-parallel situation, or the like of the convergence characteristic may become easier. In an application to sampling, a solution closer to the Boltzmann distribution may be obtained by a solution search with a constant temperature value.

**Claims**

1. An optimization device (10) by simulated annealing method, comprising:

   a state holding unit (11) configured to hold a state representing values of a plurality of state variables included in an evaluation function representing energy;
   a calculation unit (12) configured to calculate a change value ($\Delta E_0$-$\Delta E_{31}$) of the energy for each of a plurality of state transitions occurred in response to a change in one of the values of the plurality of state variables;
   a temperature control unit (13) configured to control a temperature value (T) indicating a temperature; and
   a transition control unit (14; 20) including:

      a plurality of thermal noise generation circuits (21, 22, 23, 24) each configured to receive the temperature value (T) from the temperature control unit (14; 20) and a respective independent random number (u), and to calculate thermal noise ($Tf^{-1}(u)$) based on the temperature value (T) and the respective independent random number (u);
      a plurality of comparison units (25, 26, 27, 28) configured to receive the thermal noise ($Tf^{-1}(u)$) from the plurality of thermal noise generation circuits (21, 22, 23, 24), respectively, wherein each of the plurality of comparison units (25, 26, 27, 28) is configured to receive the thermal noise ($Tf^{-1}(u)$) from a different thermal noise generation circuit of the plurality of thermal noise generation circuits (21, 22, 23, 24),
      wherein each of the plurality of comparison units (25, 26, 27, 28) comprises a plurality of comparators ($C_0$-$C_7$; $C_8$-$C_{15}$; $C_{16}$-$C_{23}$; $C_{24}$-$C_{31}$), wherein each comparator ($C_0$-$C_{31}$) of the plurality of comparison units (25, 26, 27, 28) is configured to receive a respective change value ($\Delta E_0$-$\Delta E_{31}$) of the energy for the plurality of state transitions from the calculation unit (12) and to output a transition property ($f_i$) indicating whether

to accept the state transition based on the received respective change value ($\Delta$E0-$\Delta$E31) of the energy together with an identification number ($N_i$) identifying the state transition, wherein the transition property ($f_i$) is determined based on a comparison between the respective change value ($\Delta E_0$-$\Delta E_{31}$) and the respective thermal noise ($Tf^{-1}(u)$);

a plurality of first selection circuits (30a, 30b, 30c) each configured to randomly select intermediate candidates from the transition properties ($f_i$) output by the comparators ($C_0$-$C_{31}$) of the plurality of comparison units (25, 26, 27, 28), wherein the plurality of first selection circuits (30a, 30b, 30c) are arranged such that transition properties ($f_i$) determined based on the same thermal noise ($Tf^{-1}(u)$) do not contact each other at each first selection circuit of the plurality of first selection circuits; and

a second selection circuit (30d, 30e, 30f) configured to randomly select one state transition from the intermediate candidates selected by the plurality of first selection circuits (30a, 30b, 30c), wherein the transition control unit (14; 20) is configured to output a transition number identifying the state transition selected by the second selection circuit (30d, 30e, 30f) together with the corresponding transition property ($f_i$).

2. The optimization device (10) according to claim 1, wherein
the plurality of first selection circuits (30a, 30b, 30c) are formed of a first partial selector tree which is arranged as a binary tree, and
the second selection circuit (30d, 30e, 30f) is formed of a second partial selector tree which is arranged as a binary tree.

3. The optimization device (10) according to claim 1, wherein
the state holding unit (11) is configured to change one of the values of the plurality of state variables based on the state transition selected by the second selection circuit (30d, 30e, 30f) of the transition control unit (14; 20).

4. The optimization device (10) according to claim 1, further comprising:

an energy comparison unit (15) configured to output the values of the plurality of state variables corresponding to a lowest energy among a plurality of energies calculated by the calculation unit (12).

5. A control method of an optimization device (10) by simulated annealing method according to claim 1, the control method comprising:

holding, by a state holding unit (11), a state representing values of a plurality of state variables included in an evaluation function representing energy;
calculating, by a calculation unit (12), a change value ($\Delta E_0$-$\Delta E_{31}$) of the energy for each of a plurality of state transitions occurred in response to a change in one of the values of the plurality of state variables;
controlling, by a temperature control unit (13), a temperature value (T) indicating a temperature;
receiving, by each of a plurality of thermal noise generation circuits (21, 22, 23, 24) of a transition control unit (14; 20), the temperature value (T) from the temperature control unit (14; 20) and a respective independent random number (u);
calculating, by each of a plurality of thermal noise generation circuits (21, 22, 23, 24) of the transition control unit (14; 20), thermal noise ($Tf^{-1}(u)$) based on the temperature value (T) and the respective independent random number (u);
receiving, by a plurality of comparison units (25, 26, 27, 28), thermal noise ($Tf^{-1}(u)$) from the plurality of thermal noise generation circuits (21, 22, 23, 24), respectively, wherein each of the plurality of comparison units (25, 26, 27, 28) receives the thermal noise ($Tf^{-1}(u)$) from a different thermal noise generation circuit of the plurality of thermal noise generation circuits (25, 26, 27, 28) wherein each of the plurality of comparison units (25, 26, 27, 28) comprises a plurality of comparators ($C_0$-$C_7$; $C_8$-$C_{15}$; $C_{16}$-$C_{23}$; $C_{24}$-$C_{31}$), wherein each comparator ($C_0$-$C_{31}$) of the plurality of comparison units (25, 26, 27, 28) receives a respective change value ($\Delta E_0$-$\Delta E_{31}$) of the energy for the plurality of state transitions from the calcuation unit (12) and outputs a transition property, ($f_i$) indicating whether to accept the state transition based on the received respective change value ($\Delta$E0-$\Delta$E31) of the energy together with an identification number ($N_i$) identifying the state transition, wherein the transition property ($f_i$) is determined based on a comparison between the respective change value ($\Delta E_0$-$\Delta E_{31}$,) and the respective thermal noise ($Tf^{-1}(u)$);
randomly selecting, by each of a plurality of first selection circuits (30a, 30b, 30c) of the transition control unit (14; 20), intermediate candidates from the transition properties ($f_i$) output by the comparators ($C_0$-$C_{31}$) of the plurality of comparison units (25, 26, 27, 28), wherein the plurality of first selection circuits (30a, 30b, 30c) are arranged such that transition properties ($f_i$) determined based on the same thermal noise ($Tf^{-1}(u)$) do not contact each other at each first selection circuit of the plurality of first selection circuits;
randomly selecting, by a second selection circuit (30d, 30e, 30f) of the transition control unit (14; 20), one state transition from the intermediate candidates selected by the plurality of first selection circuits (30a, 30b, 30c); and outputting, by the transition control unit (14; 20), a transition number identifying the state transition selected by the second selection circuit (30d, 30e, 30f) together with the corresponding transition property ($f_i$).

**Patentansprüche**

1. Vorrichtung zur Optimierung (10) durch ein simuliertes Wärmebehandlungsverfahren, umfassend:

eine Zustandshalteeinheit (11), die dazu ausgelegt ist, einen Zustand zu halten, der Werte einer Vielzahl von Zustandsvariablen darstellt, die in einer Bewertungsfunktion enthalten sind, die Energie darstellt;
eine Berechnungseinheit (12), die dazu ausgelegt ist, einen Änderungswert ($\Delta E_0$-$\Delta E_{31}$) der Energie für jeden einer Vielzahl von Zustandsübergängen zu berechnen, die als Reaktion auf eine Änderung in einem der Werte der Vielzahl von Zustandsvariablen aufgetreten sind;
eine Temperatursteuerungseinheit (13), die dazu ausgelegt ist, einen Temperaturwert (T) zu steuern, der eine Temperatur anzeigt; und
eine Übergangssteuerungseinheit (14; 20), die aufweist:

eine Vielzahl von Schaltungen (21, 22, 23, 24) zur Erzeugung von thermischem Rauschen, von denen jede dazu ausgelegt ist, den Temperaturwert (T) von der Temperatursteuerungseinheit (14; 20) und eine entsprechende unabhängige Zufallszahl (u) zu empfangen, und basierend auf dem Temperaturwert (T) und der entsprechenden unabhängigen Zufallszahl (u) ein thermisches Rauschen ($Tf^{-1}(u)$) zu berechnen;
eine Vielzahl von Vergleichseinheiten (25, 26, 27, 28), die jeweils dazu ausgelegt sind, das thermische Rauschen ($Tf^{-1}(u)$) von den Vielzahl von Schaltungen (21, 22, 23, 24) zur Erzeugung von thermischem Rauschen zu empfangen, wobei jede der Vielzahl von Vergleichseinheiten (25, 26, 27, 28) dazu ausgelegt ist, das thermische Rauschen ($Tf^{-1}(u)$) von einer anderen Schaltung zur Erzeugung von thermischem Rauschen der Vielzahl von Schaltungen (21, 22, 23, 24) zur Erzeugung von thermischem Rauschen zu empfangen,
wobei jede der Vielzahl von Vergleichseinheiten (25, 26, 27, 28) eine Vielzahl von Komparatoren ($C_0$-$C_7$; $C_8$-$C_{15}$; $C_{16}$-$C_{23}$; $C_{24}$-$C_{31}$) umfasst, wobei jeder Komparator ($C_0$-$C_{31}$) der Vielzahl von Vergleichseinheiten (25, 26, 27, 28) dazu ausgelegt ist, einen entsprechenden Änderungswert ($\Delta E_0$-$\Delta E_{31}$) der Energie für die Vielzahl von Zustandsübergängen von der Berechnungseinheit (12) zu empfangen, und eine Übergangseigenschaft ($f_i$) auszugeben, die angibt, ob der Zustandsübergang akzeptiert werden soll, basierend auf dem empfangenen entsprechenden Änderungswert ($\Delta E_0$-$\Delta E_{31}$) der Energie zusammen mit einer Identifikationsnummer ($N_i$), die den Zustandsübergang identifiziert, wobei die Übergangseigenschaft ($f_i$) basierend auf einem Vergleich zwischen dem entsprechenden Änderungswert ($\Delta E_0$-$\Delta E_{31}$) und dem entsprechenden thermischen Rauschen ($Tf^{-1}(u)$) bestimmt wird;
eine Vielzahl von ersten Auswahlschaltungen (30a, 30b, 30c), die jeweils dazu ausgelegt sind, Zwischenkandidaten aus den Übergangseigenschaften ($f_i$), die von den Komparatoren ($C_0$-$C_{31}$) der Vielzahl von Vergleichseinheiten (25, 26, 27, 28) ausgegeben werden, zufällig auszuwählen, wobei die Vielzahl von ersten Auswahlschaltungen (30a, 30b, 30c) so angeordnet ist, dass Übergangseigenschaften ($f_i$), die basierend auf dem gleichen thermischen Rauschen ($Tf^{-1}(u)$) bestimmt werden, sich nicht berühren an jeder ersten Auswahlschaltung der Vielzahl von ersten Auswahlschaltungen; und
eine zweite Auswahlschaltung (30d, 30e, 30f), die dazu ausgelegt ist, einen Zustandsübergang aus den Zwischenkandidaten, die von der Vielzahl von ersten Auswahlschaltungen (30a, 30b, 30c) ausgewählt wurden, zufällig auszuwählen,
wobei die Übergangssteuerungseinheit (14; 20) dazu ausgelegt ist, eine Übergangsnummer, die den von der zweiten Auswahlschaltung (30d, 30e, 30f) ausgewählten Zustandsübergang identifiziert, auszugeben, zusammen mit der entsprechenden Übergangseigenschaft ($f_i$).

2. Optimierungsvorrichtung (10) nach Anspruch 1, wobei
die Vielzahl von ersten Auswahlschaltungen (30a, 30b, 30c) aus einem ersten Teilauswahlbaum gebildet werden, der als binärer Baum angeordnet ist, und
die zweite Auswahlschaltung (30d, 30e, 30f) aus einem zweiten Teilauswahlbaum gebildet wird, der als Binärbaum angeordnet ist.

**3.** Optimierungsvorrichtung (10) nach Anspruch 1, wobei
die Zustandshalteeinheit (11) dazu ausgelegt ist, einen der Werte der Vielzahl von Zustandsvariablen basierend auf dem Zustandsübergang zu ändern, der von der zweiten Auswahlschaltung (30d, 30e, 30f) der Übergangssteuerungseinheit (14; 20) ausgewählt wurde.

**4.** Optimierungsvorrichtung (10) nach Anspruch 1, ferner umfassend:

eine Energievergleichseinheit (15), die dazu ausgelegt ist, die Werte der Vielzahl von Zustandsvariablen auszugeben, die einer niedrigsten Energie unter einer Vielzahl von der Berechnungseinheit (12) berechneten Energien entsprechen.

**5.** Steuerungsverfahren einer Vorrichtung (10) zur Optimierung durch ein simuliertes Wärmebehandlungsverfahren nach Anspruch 1, wobei das Steuerungsverfahren umfasst:

Halten, durch eine Zustandshalteeinheit (11), eines Zustands, der Werte einer Vielzahl von Zustandsvariablen darstellt, die in einer Bewertungsfunktion enthalten sind, die Energie darstellt;
Berechnen, durch eine Berechnungseinheit (12), eines Änderungswerts ($\Delta E_0$-$\Delta E_{31}$) der Energie für jeden einer Vielzahl von Zustandsübergängen, die als Reaktion auf eine Änderung in einem der Werte der Vielzahl von Zustandsvariablen aufgetreten sind;
Steuern, durch eine Temperatursteuerungseinheit (13), eines Temperaturwerts (T), der eine Temperatur angibt;
Empfangen, durch jede einer Vielzahl von Schaltungen (21, 22, 23, 24) zur Erzeugung von thermischem Rauschen einer Übergangssteuerungseinheit (14; 20), des Temperaturwerts (T) von der Temperatursteuerungseinheit (14; 20) und einer entsprechenden unabhängigen Zufallszahl (u);
Berechnen, durch jede der Vielzahl von Schaltungen (21, 22, 23, 24) zur Erzeugung von thermischem Rauschen der Übergangssteuerungseinheit (14; 20), des thermischen Rauschens ($Tf^{-1}(u)$) basierend auf dem Temperaturwert (T) und der entsprechenden unabhängige Zufallszahl (u);
Empfangen, durch eine Vielzahl von Vergleichseinheiten (25, 26, 27, 28), jeweils von thermischem Rauschen ($Tf^{-1}(u)$) von der Vielzahl von Schaltungen (21, 22, 23, 24) zur Erzeugung von thermischem Rauschen, wobei jede der Vielzahl von Vergleichseinheiten (25, 26, 27, 28) das thermische Rauschen ($Tf^{-1}(u)$) von einer anderen Schaltung zur Erzeugung von thermischem Rauschen der Vielzahl von Schaltungen (25, 26, 27, 28) zur Erzeugung von thermischem Rauschen empfängt, wobei jede der Vielzahl von Vergleichseinheiten (25, 26, 27, 28) eine Vielzahl von Komparatoren ($C_0$-$C_7$; $C_8$-$C_{15}$; $C_{16}$-$C_{23}$; $C_{24}$-$C_{31}$) umfasst, wobei jeder Komparator ($C_0$-$C_{31}$) der Vielzahl von Vergleichseinheiten (25, 26, 27, 28) einen entsprechenden Änderungswert ($\Delta E_0$-$\Delta E_{31}$) der Energie für die Vielzahl von Zustandsübergängen von der Berechnungseinheit (12) empfängt und eine Übergangseigenschaft ($f_i$), ob der Zustandsübergang akzeptiert werden soll, ausgibt basierend auf dem empfangenen entsprechenden Änderungswert ($\Delta E_0$-$\Delta E_{31}$) der Energie zusammen mit einer Identifikationsnummer ($N_i$), die den Zustandsübergang identifiziert, wobei die Übergangseigenschaft ($f_i$) basierend auf einem Vergleich zwischen dem entsprechenden Änderungswert ($\Delta E_0$-$\Delta E_{31}$) und dem entsprechenden thermischen Rauschen ($Tf^{-1}(u)$) bestimmt wird;
zufälliges Auswählen, durch jede einer Vielzahl von ersten Auswahlschaltungen (30a, 30b, 30c) der Übergangssteuerungseinheit (14; 20), von Zwischenkandidaten aus den Übergangseigenschaften ($f_i$), die von den Komparatoren ($C_0$-$C_{31}$) der Vielzahl von Vergleichseinheiten (25, 26, 27, 28) ausgegeben werden, wobei die Vielzahl von ersten Auswahlschaltungen (30a, 30b, 30c) so angeordnet ist, dass Übergangseigenschaften ($f_i$) basierend auf dem gleichen thermischen Rauschen ($Tf_{-1}(u)$) sich nicht berühren an jeder ersten Auswahlschaltung der Vielzahl von ersten Auswahlschaltungen;
zufälliges Auswählen, durch eine zweite Auswahlschaltung (30d, 30e, 30f) der Übergangssteuerungseinheit (14; 20), eines Zustandsübergangs aus den Zwischenkandidaten, die von den Vielzahl von ersten Auswahlschaltungen (30a, 30b, 30c) ausgewählt wurden; und
Ausgeben, durch die Übergangssteuerungseinheit (14; 20), einer Übergangsnummer, die den von der zweiten Auswahlschaltung (30d, 30e, 30f) ausgewählten Zustandsübergang identifiziert, zusammen mit der entsprechenden Übergangseigenschaft ($f_i$).

**Revendications**

**1.** Dispositif d'optimisation (10) par un procédé de recuit simulé, comprenant :

une unité de maintien d'état (11) configurée pour maintenir un état représentant des valeurs d'une pluralité de variables d'état incluses dans une fonction d'évaluation représentant de l'énergie ;
une unité de calcul (12) configurée pour calculer une valeur de changement ($\Delta E_0$-$\Delta E_{31}$) de l'énergie pour chacune d'une pluralité de transitions d'état survenues en réponse à un changement de l'une des valeurs de la pluralité de variables d'état ;
une unité de commande de température (13) configurée pour commander une valeur de température (T) indiquant une température ; et
une unité de commande de transition (14 ; 20) comprenant :

une pluralité de circuits de génération de bruit thermique (21, 22, 23, 24) configurés chacun pour recevoir la valeur de température (T) à partir de l'unité de commande de température (14 ; 20) et un nombre aléatoire indépendant respectif (u), et pour calculer un bruit thermique ($Tf^{-1}(u)$) sur la base de la valeur de température (T) et du nombre aléatoire indépendant respectif (u) ;
une pluralité d'unités de comparaison (25, 26, 27, 28) configurées pour recevoir le bruit thermique ($Tf^{-1}(u)$) à partir de la pluralité de circuits de génération de bruit thermique (21, 22, 23, 24), respectivement, dans lequel chacune de la pluralité d'unités de comparaison (25, 26, 27, 28) est configurée pour recevoir le bruit thermique ($Tf^{-1}(u)$) à partir d'un circuit de génération de bruit thermique différent de la pluralité de circuits de génération de bruit thermique (21, 22, 23, 24),

dans lequel chacune de la pluralité d'unités de comparaison (25, 26, 27, 28) comprend une pluralité de comparateurs ($C_0$-$C_7$ ; $C_8$-$C_{15}$ ; $C_{16}$-$C_{23}$ ; $C_{24}$-$C_{31}$), dans lequel chaque comparateur ($C_0$-$C_{31}$) de la pluralité d'unités de comparaison (25, 26, 27, 28) est configuré pour recevoir une valeur de changement respective ($\Delta E_0$-$\Delta E_{31}$) de l'énergie pour la pluralité de transitions d'état à partir de l'unité de calcul (12) et pour délivrer en sortie une propriété de transition ($f_i$) indiquant s'il faut accepter ou non la transition d'état sur la base de la valeur de changement respective reçue ($\Delta E_0$-$\Delta E_{31}$) de l'énergie en même temps qu'un numéro d'identification ($N_i$) identifiant la transition d'état, dans lequel la propriété de transition ($f_i$) est déterminée sur la base d'une comparaison entre la valeur de changement respective ($\Delta E_0$-$\Delta E_{31}$) et le bruit thermique respectif ($Tf^{-1}(u)$) ;
une pluralité de premiers circuits de sélection (30a, 30b, 30c) configurés chacun pour sélectionner de manière aléatoire des candidats intermédiaires à partir des propriétés de transition ($f_i$) délivrées en sortie par les comparateurs ($C_0$-$C_{31}$) de la pluralité d'unités de comparaison (25, 26, 27, 28), dans lequel la pluralité de premiers circuits de sélection (30a, 30b, 30c) sont agencés de telle sorte que des propriétés de transition ($f_i$) déterminées sur la base du même bruit thermique ($Tf^{-1}(u)$) ne viennent pas en contact mutuellement au niveau de chaque premier circuit de sélection de la pluralité de premiers circuits de sélection ; et
un second circuit de sélection (30d, 30e, 30f) configuré pour sélectionner de manière aléatoire une transition d'état parmi les candidats intermédiaires sélectionnés par la pluralité de premiers circuits de sélection (30a, 30b, 30c),
dans lequel l'unité de commande de transition (14 ; 20) est configurée pour délivrer en sortie un numéro de transition identifiant la transition d'état sélectionnée par le second circuit de sélection (30d, 30e, 30f) ensemble avec la propriété de transition correspondante ($f_i$).

2. Dispositif d'optimisation (10) selon la revendication 1, dans lequel
la pluralité de premiers circuits de sélection (30a, 30b, 30c) sont formés d'un premier arbre de sélection partiel qui est agencé sous la forme d'un arbre binaire, et
le second circuit de sélection (30d, 30e, 30f) est formé d'un second arbre de sélection partiel qui est agencé sous la forme d'un arbre binaire.

3. Dispositif d'optimisation (10) selon la revendication 1, dans lequel
l'unité de maintien d'état (11) est configurée pour modifier une des valeurs de la pluralité de variables d'état sur la base de la transition d'état sélectionnée par le second circuit de sélection (30d, 30e, 30f) de l'unité de commande de transition (14 ; 20).

4. Dispositif d'optimisation (10) selon la revendication 1, comprenant en outre :

une unité de comparaison d'énergie (15) configurée pour délivrer en sortie les valeurs de la pluralité de variables d'état correspondant à une énergie la plus basse parmi une pluralité d'énergies calculées par l'unité de calcul (12).

5. Procédé de commande d'un dispositif d'optimisation (10) par un procédé de recuit simulé selon la revendication 1, le procédé de commande comprenant les étapes consistant à :

maintenir, par l'intermédiaire d'une unité de maintien d'état (11), un état représentant des valeurs d'une pluralité de variables d'état incluses dans une fonction d'évaluation représentant de l'énergie ;

calculer, par l'intermédiaire d'une unité de calcul (12), une valeur de changement ($\Delta E_0$-$\Delta E_{31}$) de l'énergie pour chacune d'une pluralité de transitions d'état survenues en réponse à un changement de l'une des valeurs de la pluralité de variables d'état ;

commander, par l'intermédiaire d'une unité de commande de température (13), une valeur de température (T) indiquant une température ;

recevoir, par l'intermédiaire de chacun d'une pluralité de circuits de génération de bruit thermique (21, 22, 23, 24) d'une unité de commande de transition (14 ; 20), la valeur de température (T) à partir de l'unité de commande de température (14 ; 20) et un nombre aléatoire indépendant respectif (u) ;

calculer, par l'intermédiaire de chacun d'une pluralité de circuits de génération de bruit thermique (21, 22, 23, 24) de l'unité de commande de transition (14 ; 20), un bruit thermique ($Tf^{-1}(u)$) sur la base de la valeur de température (T) et du nombre aléatoire indépendant respectif (u) ;

recevoir, par l'intermédiaire d'une pluralité d'unités de comparaison (25, 26, 27, 28), le bruit thermique ($Tf^{-1}(u)$) à partir de la pluralité de circuits de génération de bruit thermique (21, 22, 23, 24), respectivement, dans lequel chacune de la pluralité d'unités de comparaison (25, 26, 27, 28) reçoit le bruit thermique ($Tf^{-1}(u)$) à partir d'un circuit de génération de bruit thermique différent de la pluralité de circuits de génération de bruit thermique (21, 22, 23, 24),

dans lequel chacune de la pluralité d'unités de comparaison (25, 26, 27, 28) comprend une pluralité de comparateurs ($C_0$-$C_7$ ; $C_8$-$C_{15}$ ; $C_{16}$-$C_{23}$ ; $C_{24}$-$C_{31}$), dans lequel chaque comparateur ($C_0$-$C_{31}$) de la pluralité d'unités de comparaison (25, 26, 27, 28) reçoit une valeur de changement respective ($\Delta E_0$-$\Delta E_{31}$) de l'énergie pour la pluralité de transitions d'état à partir de l'unité de calcul (12), et délivre en sortie une propriété de transition (fi) indiquant s'il faut accepter ou non la transition d'état sur la base de la valeur de changement respective reçue ($\Delta E_0$-$\Delta E_{31}$) de l'énergie avec un numéro d'identification ($N_i$) identifiant la transition d'état, dans lequel la propriété de transition ($f_i$) est déterminée sur la base d'une comparaison entre la valeur de changement respective ($\Delta E_0$-$\Delta E_{31}$) et le bruit thermique respectif ($Tf_{-1}(u)$) ;

sélectionner de manière aléatoire, par l'intermédiaire de chacun d'une pluralité de premiers circuits de sélection (30a, 30b, 30c) de l'unité de commande de transition (14 ; 20), des candidats intermédiaires à partir des propriétés de transition ($f_i$) délivrées en sortie par les comparateurs ($Co$-$C_{31}$) de la pluralité d'unités de comparaison (25, 26, 27, 28), dans lequel la pluralité de premiers circuits de sélection (30a, 30b, 30c) sont agencés de telle sorte que des propriétés de transition ($f_i$) déterminées sur la base du même bruit thermique ($Tf^{-1}(u)$) ne viennent pas en contact mutuellement au niveau de chaque premier circuit de sélection de la pluralité de premiers circuits de sélection ;

sélectionner de manière aléatoire, par l'intermédiaire d'un second circuit de sélection (30d, 30e, 30f) de l'unité de commande de transition (14 ; 20), une transition d'état parmi les candidats intermédiaires sélectionnés par la pluralité de premiers circuits de sélection (30a, 30b, 30c) ; et

délivrer en sortie, par l'intermédiaire de l'unité de commande de transition (14 ; 20), un numéro de transition identifiant la transition d'état sélectionnée par le second circuit de sélection (30d, 30e, 30f) ensemble avec la propriété de transition correspondante ($f_i$).

# FIG. 1

TRANSITION CONTROLLER 20

# FIG. 2

# FIG. 3

S1

RECEIVE ENERGY CHANGE VALUE CORRESPONDING TO EACH OF PLURAL STATE TRANSITIONS

S2

DETERMINE PROPRIETY OF TRANSITION OF EACH STATE VARIABLE FROM ENERGY CHANGE VALUE AND THERMAL NOISE

S3

SELECT ONE STATE VARIABLE TO BE ACTUALLY TRANSITIONED FROM TRANSITION-ACCEPTABLE CANDIDATES

# FIG. 4

FIG. 5

# FIG. 6

# FIG. 7

$N_i, f_i$     $N_j, f_j$

CANDIDATE
SELECTION RANDOM
NUMBER

100

0     2:1     1

$N_o, f_o$

# FIG. 8

# FIG. 9

COMPARATOR C0
COMPARATOR C16
COMPARATOR C32
COMPARATOR C48
COMPARATOR C64
COMPARATOR C80
COMPARATOR C96
COMPARATOR C112
COMPARATOR C128
COMPARATOR C144
COMPARATOR C160
COMPARATOR C176
COMPARATOR C192
COMPARATOR C208
COMPARATOR C224
COMPARATOR C240

COMPARATOR C992
COMPARATOR C1008

16 SELECTORS

FIRST PARTIAL SELECTOR TREE

T0
T1
T15

# FIG. 10

CANDI-
DATE

T20
SECOND PARTIAL SELECTOR TREE

# FIG. 11

90

| THERMAL NOISE GENERATION CIRCUIT | SELECTOR UNIT |
|---|---|

$\Delta E_0 \rightarrow$ COMPARATOR C0
$\Delta E_1 \rightarrow$ COMPARATOR C1
$\Delta E_2 \rightarrow$ COMPARATOR C2
$\Delta E_3 \rightarrow$ COMPARATOR C3
$\Delta E_4 \rightarrow$ COMPARATOR C4
$\Delta E_5 \rightarrow$ COMPARATOR C5
$\Delta E_6 \rightarrow$ COMPARATOR C6
$\Delta E_7 \rightarrow$ COMPARATOR C7
$\Delta E_8 \rightarrow$ COMPARATOR C8
$\Delta E_9 \rightarrow$ COMPARATOR C9
$\Delta E_{10} \rightarrow$ COMPARATOR C10
$\Delta E_{11} \rightarrow$ COMPARATOR C11
$\Delta E_{12} \rightarrow$ COMPARATOR C12
$\Delta E_{13} \rightarrow$ COMPARATOR C13
$\Delta E_{14} \rightarrow$ COMPARATOR C14
$\Delta E_{15} \rightarrow$ COMPARATOR C15

THERMAL NOISE GENERATION CIRCUIT

$\Delta E_{16} \rightarrow$ COMPARATOR C16
$\Delta E_{17} \rightarrow$ COMPARATOR C17
$\Delta E_{18} \rightarrow$ COMPARATOR C18
$\Delta E_{19} \rightarrow$ COMPARATOR C19
$\Delta E_{20} \rightarrow$ COMPARATOR C20
$\Delta E_{21} \rightarrow$ COMPARATOR C21
$\Delta E_{22} \rightarrow$ COMPARATOR C22
$\Delta E_{23} \rightarrow$ COMPARATOR C23
$\Delta E_{24} \rightarrow$ COMPARATOR C24
$\Delta E_{25} \rightarrow$ COMPARATOR C25
$\Delta E_{26} \rightarrow$ COMPARATOR C26
$\Delta E_{27} \rightarrow$ COMPARATOR C27
$\Delta E_{28} \rightarrow$ COMPARATOR C28
$\Delta E_{29} \rightarrow$ COMPARATOR C29
$\Delta E_{30} \rightarrow$ COMPARATOR C30
$\Delta E_{31} \rightarrow$ COMPARATOR C31

# FIG. 12

# FIG. 13

# FIG. 14

OPTIMIZATION DEVICE <u>10</u>

**EP 3 637 202 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017219948 A
- JP 2016051350 A
- US 2018107172 A